# EUROPEAN PATENT APPLICATION

(11) **EP 4 349 609 A1**
(43) Date of publication of application: **10.04.2024**
(21) Application number: 22816006.5
(22) Date of filing: 27.05.2022
(51) Int. Cl.: B41M 5/28, B41M 5/333, B41M 5/337

(54) **REVERSIBLY THERMOCHROMIC COMPOSITION, WRITING UTENSIL USING SAID REVERSIBLY THERMOCHROMIC COMPOSITION, AND TOY**

(30) Priority: 31.05.2021 JP 2021091291
(71) Applicant: Mitsubishi Chemical Corporation, Chiyoda-ku Tokyo 100-8251 (JP)
(72) Inventor: KAWAI, Junya, Tokyo 100-8251 (JP); INADA, Keiichiro, Tokyo 100-8251 (JP); UEHARA, Hisatoshi, Tokyo 100-8251 (JP); KOBAYASHI, Takao, Tokyo 100-8251 (JP)
(74) Representative: Ter Meer Steinmeister & Partner
(86) International application number: PCT/JP2022/021769
(87) International publication number: WO 2022/255256

(57) **Abstract**

Provided is a reversibly thermochromic composition which has a non-phenolic structure imposing little burden on the human body and the environment, and achieves both excellent color developing sensitivity and excellent decoloring property; a writing utensil containing the same; and a toy containing the same. Problems are solved by a reversibly thermochromic composition that contains a color developer containing a compound represented by the following Formula (1), a leuco dye, and a color change temperature regulator (wherein, a, a', b, A, A', and X are as follows: a represents an integer selected from 0 to 5; a' represents an integer selected from 0 to 5; b represents 0 or 1; X represents - C(=Y)- or -SO₂-; a sum of a and a' is 1 or more; A and A' each independently represent an electron-withdrawing group or a hydrogen-bonding group; and Y represents O or S, with a proviso that benzene rings in Formula (1) each optionally have a substituent other than A or A'):

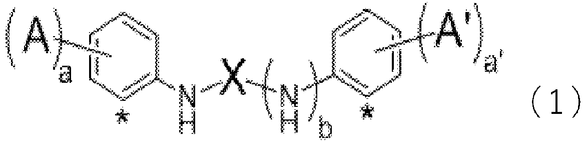

## Description

### TECHNICAL FIELD

The present invention relates to: a reversibly thermochromic composition; a writing utensil containing the reversibly thermochromic composition; and a toy containing the reversibly thermochromic composition.

### BACKGROUND ART

A reversibly thermochromic composition contains, as main components, a basic (electron-donating) leuco dye (hereinafter, may be simply referred to as "leuco dye"), an electron-accepting color developer (hereinafter, may be simply referred to as "color developer"), and a color change temperature regulator. The color change temperature regulator controls a change between a decolored state and a colored state by reversibly inducing an electron transfer reaction between the leuco dye and the color developer in a specific temperature range, (e.g., Patent Document 1).

As the color developer contained in the reversibly thermochromic composition, a compound mainly composed of a bisphenol structure, which is typified by 2,2-bis(4-hydroxyphenyl)propane (bisphenol A), 2,2-bis(4-hydroxyphenyl)-1,1,1,3,3,3-hexafluoropropane (bisphenol AF), and the like, is often used. From the standpoint of the effects of the bisphenol structure on endocrine-disrupting chemicals and the like, however, it is believed to be preferable to use a color developer having neither a bisphenol structure nor a phenol structure.

Patent Documents 2, 3, and 4 each disclose a reversibly thermochromic composition that contains diphenylurea or diphenylthiourea as a color developer having neither a bisphenol structure nor a phenol structure.

### RELATED ART DOCUMENTS

### PATENT DOCUMENTS

[Patent Document 1] Japanese Unexamined Patent Application Publication No. 2005-213361
[Patent Document 2] Japanese Unexamined Patent Application Publication No. S62-140881
[Patent Document 3] Japanese Unexamined Patent Application Publication No. S62-079283
[Patent Document 4] Japanese Unexamined Patent Application Publication No. S62-101684

### SUMMARY OF THE INVENTION

### PROBLEMS TO BE SOLVED BY THE INVENTION

As described above, it is desired to develop a color developer that imposes less burden on the human body and the environment than a compound mainly composed of a bisphenol structure or a phenol structure. When the present inventors produced reversibly thermochromic compositions using the respective color developers disclosed in Patent Documents 2 to 4 and evaluated the color developing sensitivity and the decoloring property, these reversibly thermochromic compositions did not exhibit sufficient color developing sensitivity and decoloring property.

That is, an object of the present invention is to provide: a reversibly thermochromic composition which has a non-phenolic structure imposing little burden on the human body and the environment, and achieves both excellent color developing sensitivity and excellent decoloring property; a writing utensil containing the reversibly thermochromic composition; and a toy containing the reversibly thermochromic composition.

### MEANS FOR SOLVING THE PROBLEMS

The present inventors intensively studied and consequently discovered that the above-described problem can be solved by using a compound having a specific structure as a color developer. That is, the gist of the present invention is as follows.
[1] A reversibly thermochromic composition, containing:
   a color developer containing a compound represented by the following Formula (1);
   a leuco dye; and
   a color change temperature regulator: 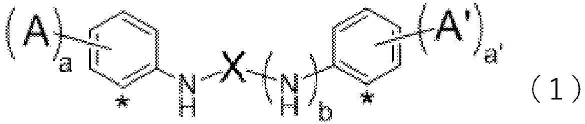 (wherein, a, a', b, A, A', and X are as follows:
      a represents an integer selected from 0 to 5;
      a' represents an integer selected from 0 to 5;
      b represents 0 or 1;
      X represents -C(=Y)- or -SO₂-;
      a sum of a and a' is 1 or more;
      A and A' each independently represent an electron-withdrawing group or a hydrogen-bonding group; and
      Y represents O or S,
      with a proviso that benzene rings in Formula (1) each optionally have a substituent other than A or A').
[2] The reversibly thermochromic composition according to [1], wherein, in Formula (1), at least one of A or A' is an electron-withdrawing group selected from a halogen atom, a nitrile group, a carboxyl group, an alkyl group having at least one fluoro group, and an oxycarbonyl group, a carbonyl group, an aminocarbonyl group, an aminosulfonyl group, a sulfinyl group, and a sulfonyl group, which optionally have a substituent.
[3] The reversibly thermochromic composition according to [2], wherein, in Formula (1), at least one of A or A' is an electron-withdrawing group selected from a fluoro group, an alkyl group having at least one fluoro group, and an oxycarbonyl group optionally having a substituent.
[4] The reversibly thermochromic composition according to [1], wherein, in Formula (1), at least one of A or A' is a hydrogen-bonding group selected from a carboxyl group, and an amino group, a carbonylamino group, a urea group, and a sulfonylamide group, which optionally have a substituent.
[5] The reversibly thermochromic composition according to any one of [1] to [4], wherein, in Formula (1), at least one of A or A' is bound to the *-position.
[6] The reversibly thermochromic composition according to [4] or [5], wherein, in Formula (1): a is 1 or more; at least one A is bound to the *-position; the A bound to the *-position is a hydrogen-bonding group selected from a carboxyl group, and an amino group, a carbonylamino group, a urea group, and a sulfonylamide group, which optionally have a substituent; and b is 0.
[7] The reversibly thermochromic composition according to any one of [1] to [5], wherein, in Formula (1), b is 1.
[8] A microcapsule pigment, containing the reversibly thermochromic composition according to any one of [1] to [7] that is encapsulated in a microcapsule.
[9] A writing utensil, containing the reversibly thermochromic composition according to any one of [1] to [7], or the microcapsule pigment according to [8].
[10] A toy, containing the reversibly thermochromic composition according to any one of [1] to [7], or the microcapsule pigment according to [8].

### EFFECTS OF THE INVENTION

According to the present invention, a reversibly thermochromic composition having excellent color developing sensitivity and excellent decoloring property, a writing utensil containing the reversibly thermochromic composition, and a toy containing the reversibly thermochromic composition are provided.

### MODE FOR CARRYING OUT THE INVENTION

The present invention will now be described in detail; however, the present invention is not limited to the following descriptions, and can be carried out with any modification without departing from the gist of the present invention. It is noted here that, in the present invention, those ranges that are stated with "to" before and after numerical or physical property values each denote a range that includes the respective values stated before and after "to".

The reversibly thermochromic composition according to one embodiment of the present invention contains: a color developer containing a compound represented by the following Formula (1); a leuco dye; and a color change temperature regulator. The compound represented by Formula (1) may be hereinafter referred to as "compound (1)". 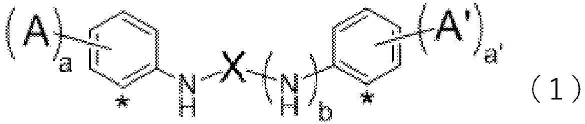 (wherein, a, a', b, A, A', and X are as follows:
a represents an integer selected from 0 to 5;
a' represents an integer selected from 0 to 5;
b represents 0 or 1;
X represents -C(=Y)- or -SO₂-;
a sum of a and a' is 1 or more;
A and A' each independently represent an electron-withdrawing group or a hydrogen-bonding group; and
Y represents O or S,
with a proviso that benzene rings in Formula (1) each optionally have a substituent other than A or A').

The reversibly thermochromic composition according to one embodiment of the present invention exerts a prominent effect of having excellent color developing sensitivity as well as excellent decoloring property when heat is applied thereto. The reason why the reversibly thermochromic composition exerts this effect is presumed as follows. That is, it is believed that, since the above-described Formula (1) has A and/or A' and at least one of A or A' is an electron-withdrawing group or a hydrogen-bonding group, the crystallinity is moderately reduced while the reactivity and the compatibility with the leuco dye are improved, as a result of which the color developing sensitivity is increased. In addition, the decoloring property is believed to be improved as a result of an improvement in the compatibility with the color change temperature regulator.

### [Color Developer]

The color developer contained in the reversibly thermochromic composition according to the present embodiment contains a compound represented by the above-described Formula (1) .

In Formula (1), a is an integer selected from 0 to 5, preferably 4 or less, more preferably 3 or less. It is believed that a large value of a makes the molecule hardly mobile, causing a reduction in the color developing sensitivity and deterioration of the decoloring property.

In Formula (1), a' is an integer selected from 0 to 5, preferably 4 or less, more preferably 3 or less. It is believed that a large value of a' makes the molecule hardly mobile, causing a reduction in the color developing sensitivity and deterioration of the decoloring property.

It is noted here that a sum of a and a' is 1 or more. When the sum of a and a' is 1 or more, the color developing sensitivity is increased by a moderate reduction in the crystallinity and an improvement in the reactivity and the compatibility with the leuco dye, while the decoloring property can be enhanced by an improvement in the compatibility with the color change temperature regulator.

In Formula (1), b is 0 or 1, preferably 1. When b is 1, since the number of proton-donating hydrogen atoms contributing to leuco-type color development is increased, the reactivity with the leuco dye is increased, so that the color developing sensitivity and the preservation of a colored state in a temperature range lower than a decoloring temperature can be improved.

When b is 0, a is preferably 1 or larger. It is believed that the reactivity with the leuco dye is increased when a is 1 or larger.

X represents -C(=Y)- or -SO₂-, and Y represents O or S. These X and Y can be selected as appropriate so as to obtain a color developer that exhibits desired color developing sensitivity and decoloring property. X is preferably -C(=Y)-since this provides high compatibility with the leuco dye, while X is preferably -SO₂- since this provides excellent compatibility with the color change temperature regulator. Y is preferably O since this provides excellent reactivity with the leuco dye, while Y is preferably S since this provides particularly excellent compatibility with the leuco dye.

The term "electron-withdrawing group" used herein refers to a substituent having an electron-withdrawing property. In the present specification, the electron-withdrawing group is a substituent having a Hammett substituent constant (*para-*position, σρ) of larger than 0. The Hammett substituent constant is described in, for example, Ryoji Noyori, et al., "Daigakuin Kogi Yuki Kagaku", First Edition, Volume I, Tokyo Kagaku Dojin Publishing Co., Ltd., June 1999, p.175.

Examples of the electron-withdrawing group include, but not limited to: a halogen atom, a nitrile group, a carboxyl group, an alkyl group having at least one fluoro group, and an oxycarbonyl group, a carbonyl group, an aminocarbonyl group, an aminosulfonyl group, a sulfinyl group, and a sulfonyl group, which optionally have a substituent.

The term "hydrogen-bonding group" used herein refers to a substituent having an active proton moiety, or a substituent having a moiety capable of donating a hydrogen bond.

The hydrogen-bonding group is, for example, but not limited to, a hydrogen-bonding group selected from a carboxyl group, and an amino group, a carbonylamino group, a urea group and a sulfonylamide group, which optionally have a substituent.

The benzene rings in Formula (1) each optionally have a substituent other than A or A'. Examples of this substituent other than A or A' include, but not limited to, an alkyl group, an aryl group, a heteroaryl group, an ether group, a thioether group, a carbonyloxy group, and a sulfonyloxy group, which optionally have a substituent.

Examples of the halogen atom include a fluoro group, a chloro group, a bromo group, and an iodine group. The halogen atom is preferably a fluoro group, a chloro group, or a bromo group since this increases the reactivity with the leuco dye, and the halogen atom is particularly preferably a fluoro group or a chloro group, more preferably a fluoro group, since this is likely to improve the light resistance.

The alkyl group is preferably a linear or branched alkyl group having 1 to 22 carbon atoms that optionally has a substituent. Such an alkyl group improves the compatibility with the color change temperature regulator, so that the decoloring property can be enhanced. An excessively large number of carbon atoms is believed to overly reduce the melting point and cause deterioration of the preservation of a colored state and the color developing property; therefore, the number of carbon atoms is preferably 12 or less, more preferably 6 or less, particularly preferably 4 or less.

Examples of the alkyl group include a methyl group, an ethyl group, an *n*-propyl group, an isopropyl group, an *n*-butyl group, an isobutyl group, a *sec*-butyl group, a *t*-butyl group, a pentyl group, a hexyl group, a heptyl group, a 1-ethylpentyl group, an octyl group, a 2-ethylhexyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, an icosyl group, an eicosyl group, a heneicosyl group, and a docosyl group. The alkyl group is preferably a methyl group, an ethyl group, an *n*-propyl group, an isopropyl group, an *n*-butyl group, an isobutyl group, a sec-butyl group, a *t-*butyl group, a pentyl group, or a hexyl group, more preferably a methyl group, an ethyl group, an *n*-propyl group, an isopropyl group, an *n*-butyl group, an isobutyl group, a *sec-*butyl group, or a *t*-butyl group, particularly preferably a methyl group.

The alkyl group optionally has a substituent, and examples of a preferred substituent include a halogen atom since its electron-withdrawing property increases the reactivity with the leuco dye. Among halogen atoms, a fluoro group, a chloro group, or a bromo group is preferred, and a fluoro group is particularly preferred.

In the above-described Formula (1), A and/or A' is particularly preferably an alkyl group having at least one fluoro group. When A and/or A' has at least one fluoro group, the color developing sensitivity can be increased by the electron-withdrawing property of the fluoro group. The fluoro group is not limited in terms of the position and the number; however, a large number of fluoro groups lead to an improved electron-withdrawing property and thus an increased reactivity with the leuco dye; therefore, a perfluoroalkyl group is preferred. On the other hand, an excessively large number of fluoro groups are believed to deteriorate the color developing sensitivity and the decoloring property by reducing the compatibility with the leuco dye and the color change temperature regulator. A trifluoromethyl group is particularly preferred since its strong electron-withdrawing property not only increases the reactivity with the leuco dye but also provides a moderate compatibility.

The aryl group and the heteroaryl group are an aromatic hydrocarbon group having 6 to 20 carbon atoms that optionally has a substituent, and an aromatic heterocyclic group having 2 to 20 carbon atoms that optionally has a substituent, respectively.

Examples of the aromatic hydrocarbon group include a phenyl group, a naphthyl group, a phenanthryl group, a biphenyl group, an anthryl group, a pyrenyl group, a fluorenyl group, an azulenyl group, an acenaphthenyl group, a fluoranthenyl group, a naphthacenyl group, a perylenyl group, a pentacenyl group, a triphenylenyl group, and a quaterphenyl group. Thereamong, a phenyl group or a naphthyl group is preferred.

Examples of the aromatic heterocyclic group include a pyridyl group, a thienyl group, a furyl group, a pyrrolyl group, an oxazolyl group, a thiazolyl group, an oxadiazolyl group, a thiadiazolyl group, a pyrazinyl group, a pyrimidinyl group, a pyrazolyl group, an imidazolyl group, a benzothienyl group, a dibenzofuryl group, a dibenzothienyl group, a phenylcarbazolyl group, a phenoxathienyl group, a xanthenyl group, a benzofuranyl group, a thianthrenyl group, an indolizinyl group, a phenoxazinyl group, a phenothiazinyl group, an acridinyl group, a phenanthridinyl group, a phenanthrolinyl group, a quinolyl group, an isoquinolyl group, an indolyl group, and a quinoxalinyl group. Thereamong, a pyridyl group, a pyrazinyl group, a pyrimidinyl group, a pyrazolyl group, a quinolyl group, an isoquinolyl group, an imidazolyl group, an acridinyl group, a phenanthridinyl group, a phenanthrolinyl group, a quinoxalinyl group, a dibenzofuryl group, a dibenzothienyl group, a phenylcarbazolyl group, a xanthenyl group, or a phenoxazinyl group is preferred.

Among these aryl groups and heteroaryl groups, from the standpoint of improving the compatibility with the leuco dye and the color change temperature regulator and thereby enhancing the color developing sensitivity and the decoloring property, aromatic hydrocarbon groups are preferred, and a phenyl group is particularly preferred.

The ether group is represented by the following Formula (2) :

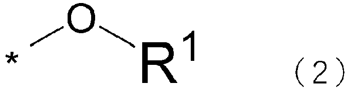

In Formula (2), R¹ represents an alkyl group having 1 to 12 carbon atoms, an aromatic hydrocarbon group having 6 to 14 carbon atoms, or an aromatic heterocyclic group having 2 to 10 carbon atoms, which optionally has a substituent.

An alkyl group is preferred since it reduces the crystallinity and thereby improves the compatibility with the color change temperature regulator, so that the decoloring property can be enhanced, and an aromatic hydrocarbon group is preferred since it improves the compatibility with the color change temperature regulator and thereby enhances the decoloring property.

In Formula (2), * represents a site binding to A.

Examples of the alkyl group include a methyl group, an ethyl group, an *n*-propyl group, an isopropyl group, an *n*-butyl group, an isobutyl group, a *sec*-butyl group, a *t*-butyl group, a pentyl group, a hexyl group, a heptyl group, an octyl group, a 2-ethylhexyl group, a nonyl group, a decyl group, an undecyl group, and a dodecyl group. An excessively long chain leads to an overly high compatibility with the color change temperature regulator, and this is likely to deteriorate the preservation of a colored state; therefore, the alkyl group is preferably a methyl group, an ethyl group, an *n*-propyl group, an isopropyl group, an *n*-butyl group, an isobutyl group, a *sec*-butyl group, a *t*-butyl group, a pentyl group, a hexyl group, a heptyl group, an octyl group, a 2-ethylhexyl group, a nonyl group, or a decyl group.

Examples of the aromatic hydrocarbon group include a phenyl group, a naphthyl group, a phenanthryl group, a biphenyl group, an anthryl group, a pyrenyl group, a fluorenyl group, an azulenyl group, an acenaphthenyl group, a fluoranthenyl group, a naphthacenyl group, a perylenyl group, a pentacenyl group, a triphenylenyl group, and a quaterphenyl group. Thereamong, a phenyl group or a naphthyl group is preferred.

Examples of the aromatic heterocyclic group include a pyridyl group, a thienyl group, a furyl group, a pyrrolyl group, an oxazolyl group, a thiazolyl group, an oxadiazolyl group, a thiadiazolyl group, a pyrazinyl group, a pyrimidinyl group, a pyrazolyl group, an imidazolyl group, a benzothienyl group, a dibenzofuryl group, a dibenzothienyl group, a phenylcarbazolyl group, a phenoxathienyl group, a xanthenyl group, a benzofuranyl group, a thianthrenyl group, an indolizinyl group, a phenoxazinyl group, a phenothiazinyl group, an acridinyl group, a phenanthridinyl group, a phenanthrolinyl group, a quinolyl group, an isoquinolyl group, an indolyl group, and a quinoxalinyl group. Thereamong, a pyridyl group, a pyrazinyl group, a pyrimidinyl group, a pyrazolyl group, a quinolyl group, an isoquinolyl group, an imidazolyl group, an acridinyl group, a phenanthridinyl group, a phenanthrolinyl group, a quinoxalinyl group, a dibenzofuryl group, a dibenzothienyl group, a phenylcarbazolyl group, a xanthenyl group, or a phenoxazinyl group is preferred.

The thioether group is represented by the following Formula (3):

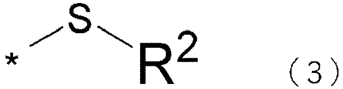

In Formula (3), R² is the same as R¹. R² is preferably an alkyl group since it reduces the crystallinity and thereby improves the compatibility with the color change temperature regulator, so that the decoloring property can be enhanced, and R² is preferably an aromatic hydrocarbon group or an aromatic heterocyclic group since it improves the compatibility with the color change temperature regulator and thereby enhances the decoloring property.

In Formula (3), * represents a site binding to A.

The oxycarbonyl group is represented by the following Formula (4):

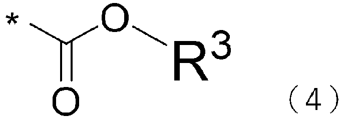

In Formula (4), R³ is the same as R¹. R³ is preferably an alkyl group since it reduces the crystallinity and thereby improves the compatibility with the color change temperature regulator, so that the decoloring property can be enhanced, and R³ is preferably an aromatic hydrocarbon group or an aromatic heterocyclic group since it improves the compatibility with the color change temperature regulator and thereby enhances the decoloring property.

When A and/or A' is an oxycarbonyl group, because of its electron-withdrawing property, the reactivity with the leuco dye can be increased and, at the same time, the compatibility with the color change temperature regulator can be improved to enhance the decoloring property.

In Formula (4), * represents a site binding to A.

The carbonyloxy group is represented by the following Formula (5):

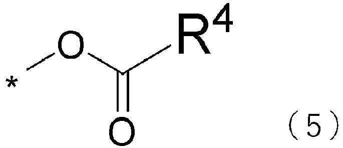

In Formula (5), R⁴ is the same as R¹. R⁴ is preferably an alkyl group since it reduces the crystallinity and thereby improves the compatibility with the color change temperature regulator, so that the decoloring property can be enhanced, and R⁴ is preferably an aromatic hydrocarbon group or an aromatic heterocyclic group since it improves the compatibility with the color change temperature regulator and thereby enhances the decoloring property.

In Formula (5), * represents a site binding to A.

The carbonyl group is represented by the following Formula (6):

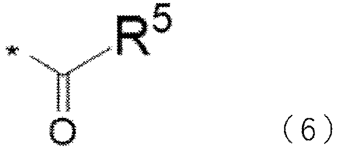

In Formula (6), R⁵ is the same as R¹. R⁵ is preferably an alkyl group since it reduces the crystallinity and thereby improves the compatibility with the color change temperature regulator, so that the decoloring property can be enhanced, and R⁵ is preferably an aromatic hydrocarbon group or an aromatic heterocyclic group since it improves the compatibility with the color change temperature regulator and thereby enhances the decoloring property.

When A and/or A' is a carbonyl group, because of its electron-withdrawing property, the reactivity with the leuco dye can be increased and, at the same time, the compatibility with the color change temperature regulator can be improved to enhance the decoloring property.

In Formula (6), * represents a site binding to A.

The amino group is represented by the following Formula (7) :

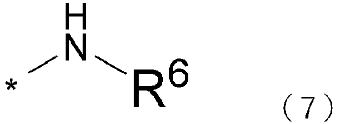

In Formula (7), R⁶ is the same as R¹. R⁶ is preferably an alkyl group since it reduces the crystallinity and thereby improves the compatibility with the color change temperature regulator, so that the decoloring property can be enhanced, and R⁶ is preferably an aromatic hydrocarbon group or an aromatic heterocyclic group since it improves the compatibility with the color change temperature regulator and thereby enhances the decoloring property. When A and/or A' is an amino group, the number of hydrogen atoms contributing to the reaction with the leuco dye is increased, so that the color developing sensitivity can be improved and, at the same time, the compatibility with the color change temperature regulator can be improved to enhance the decoloring property. R⁶ is particularly preferably an aromatic hydrocarbon group or an aromatic heterocyclic group, especially an aromatic hydrocarbon group, since this can improve the proton-donating property of A and/or A'.

In Formula (7), * represents a site binding to A.

The carbonylamino group is represented by the following Formula (8):

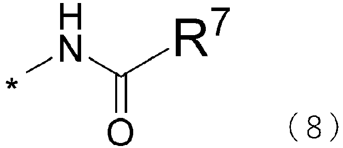

In Formula (8), R⁷ is the same as R¹. R⁷ is preferably an alkyl group since it reduces the crystallinity and thereby improves the compatibility with the color change temperature regulator, so that the decoloring property can be enhanced, and R⁷ is preferably an aromatic hydrocarbon group or an aromatic heterocyclic group since it improves the compatibility with the color change temperature regulator and thereby enhances the decoloring property. When A and/or A' is a carbonylamino group, the number of hydrogen atoms contributing to the reaction with the leuco dye is increased, so that the color developing sensitivity can be improved and, at the same time, the compatibility with the color change temperature regulator can be improved to enhance the decoloring property.

In Formula (8), * represents a site binding to A.

The aminocarbonyl group is represented by the following Formula (9):

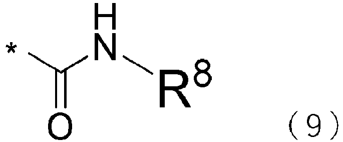

In Formula (9), R⁸ is the same as R¹. R⁸ is preferably an alkyl group since it reduces the crystallinity and thereby improves the compatibility with the color change temperature regulator, so that the decoloring property can be enhanced, and R⁸ is preferably an aromatic hydrocarbon group or an aromatic heterocyclic group since it improves the compatibility with the color change temperature regulator and thereby enhances the decoloring property. When A and/or A' is an aminocarbonyl group, because of its electron-withdrawing property, the reactivity with the leuco dye can be increased and, at the same time, the compatibility with the color change temperature regulator can be improved to enhance the decoloring property.

In Formula (9), * represents a site binding to A.

The urea group is represented by the following Formula (10) :

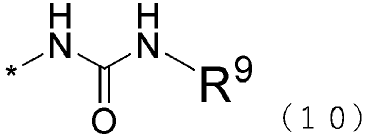

In Formula (10), R⁹ is the same as R¹. R⁹ is preferably an alkyl group since it reduces the crystallinity and thereby improves the compatibility with the color change temperature regulator, so that the decoloring property can be enhanced, and R⁹ is preferably an aromatic hydrocarbon group or an aromatic heterocyclic group since it improves the compatibility with the color change temperature regulator and thereby enhances the decoloring property. When A and/or A' is a urea group, the number of hydrogen atoms contributing to the reaction with the leuco dye is increased, so that the color developing sensitivity can be improved and, at the same time, the compatibility with the color change temperature regulator can be improved to enhance the decoloring property.

In Formula (10), * represents a site binding to A.

The sulfonylamide group is represented by the following Formula (11):

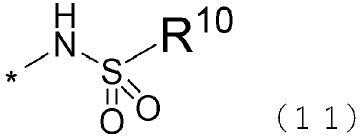

In Formula (11), R¹⁰ is the same as R¹. R¹⁰ is preferably an alkyl group since it reduces the crystallinity and thereby improves the compatibility with the color change temperature regulator, so that the decoloring property can be enhanced, and R¹⁰ is preferably an aromatic hydrocarbon group or an aromatic heterocyclic group since it improves the compatibility with the color change temperature regulator and thereby enhances the decoloring property. When A and/or A' is a sulfonylamide group, the number of hydrogen atoms contributing to the reaction with the leuco dye is increased, so that the color developing sensitivity can be improved and, at the same time, the compatibility with the color change temperature regulator can be improved to enhance the decoloring property.

In Formula (11), * represents a site binding to A.

The aminosulfonyl group is represented by the following Formula (12):

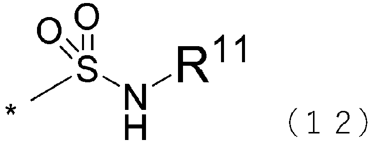

In Formula (12), R¹¹ is the same as R¹. R¹¹ is preferably an alkyl group since it reduces the crystallinity and thereby improves the compatibility with the color change temperature regulator, so that the decoloring property can be enhanced, and R¹¹ is preferably an aromatic hydrocarbon group or an aromatic heterocyclic group since it improves the compatibility with the color change temperature regulator and thereby enhances the decoloring property. When A and/or A' is an aminosulfonyl group, because of its electron-withdrawing property, the reactivity with the leuco dye can be increased and, at the same time, the compatibility with the color change temperature regulator can be improved to enhance the decoloring property.

In Formula (12), * represents a site binding to A.

The sulfinyl group is represented by the following Formula (13):

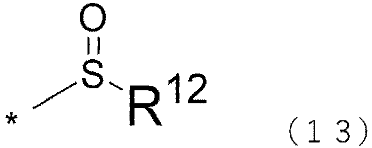

In Formula (13), R¹² is the same as R¹. R¹² is preferably an alkyl group since it reduces the crystallinity and thereby improves the compatibility with the color change temperature regulator, so that the decoloring property can be enhanced, and R¹² is preferably an aromatic hydrocarbon group or an aromatic heterocyclic group since it improves the compatibility with the color change temperature regulator and thereby enhances the decoloring property. When A and/or A' is a sulfinyl group, because of its electron-withdrawing property, the reactivity with the leuco dye can be increased and, at the same time, the compatibility with the color change temperature regulator can be improved to enhance the decoloring property.

In Formula (13), * represents a site binding to A.

The sulfonyl group is represented by the following Formula (14):

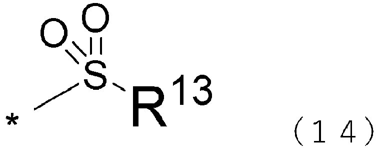

In Formula (14), R¹³ is the same as R¹. R¹³ is preferably an alkyl group since it reduces the crystallinity and thereby improves the compatibility with the color change temperature regulator, so that the decoloring property can be enhanced, and R¹³ is preferably an aromatic hydrocarbon group or an aromatic heterocyclic group since it improves the compatibility with the color change temperature regulator and thereby enhances the decoloring property. When A and/or A' is a sulfonyl group, because of its electron-withdrawing property, the reactivity with the leuco dye can be increased and, at the same time, the compatibility with the color change temperature regulator can be improved to enhance the decoloring property.

In Formula (14), * represents a site binding to A.

The sulfonyloxy group is represented by the following Formula (15):

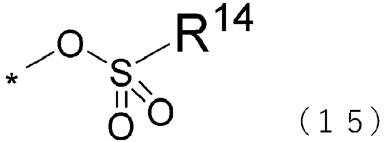

In Formula (15), R¹⁴ is the same as R¹. R¹⁴ is preferably an alkyl group since it reduces the crystallinity and thereby improves the compatibility with the color change temperature regulator, so that the decoloring property can be enhanced, and R¹⁴ is preferably an aromatic hydrocarbon group or an aromatic heterocyclic group since it improves the compatibility with the color change temperature regulator and thereby enhances the decoloring property.

In Formula (15), * represents a site binding to A.

In the above-described Formula (1), when A and A' are each a substituent selected from an alkyl group, an aryl group, a heteroaryl group, an ether group, a thioether group, an oxycarbonyl group, a carbonyloxy group, a carbonyl group, an amino group, a carbonylamino group, an aminocarbonyl group, a urea group, a sulfonylamide group, an aminosulfonyl group, a sulfinyl group, a sulfonyl group, and a sulfonyloxy group, A and A' may further have an arbitrary substituent.

In the above-described Formula (1), at least one of A or A' is preferably an electron-withdrawing group selected from a fluoro group, an alkyl group having at least one fluoro group, and an oxycarbonyl group optionally having a substituent, or a hydrogen-bonding group selected from a carboxyl group, a carbonylamino group, a urea group and a sulfonylamide group. When at least one of A or A' is any of these electron-withdrawing or hydrogen-bonding substituents, not only the reactivity with the leuco dye is increased and the color developing sensitivity is thus likely to be improved, but also the compatibility with the color change temperature regulator can be improved. Particularly, a fluoro group or an alkyl group having at least one fluoro group is preferred since its strong electron-withdrawing property is likely to improve both the reactivity and the compatibility with the leuco dye, and a trifluoromethyl group is especially preferred.

In the above-described Formula (1), at least one of A or A' is preferably bound to the *-position shown in Formula (1). By having a substituent at this position that is adjacent to an NH group involved in the reaction with the leuco dye, it is believed that, because of its steric hindrance and electronic repulsion, the stability of a colored state after the reaction with the leuco dye is moderately reduced, so that the decoloring property upon application of heat can be effectively improved.

In the above-described Formula (1), the at least one of A or A' that is bound to the *-position is preferably a hydrogen-bonding group. When a hydrogen-bonding group is bound to the *-position, the hydrogen-bonding group is likely to form an intramolecular hydrogen bond with the adjacent NH group and thereby weaken intermolecular hydrogen bonds; therefore, not only the crystallinity can be reduced and an excessive increase in the melting point can be inhibited, but also the compatibility with the leuco dye can be improved. At the same time, since the hydrogen-bonding group can be involved in the reaction with the leuco dye, it is believed that the color developing sensitivity can be effectively increased as well.

In the above-described Formula (1), when b is 0, at least one of A or A' is preferably a hydrogen-bonding group bound to the *-position shown in Formula (1). It is more preferred that: a is 1 or larger; at least one A is bound to the *-position shown in Formula (1); and the A bound to the *-position is a hydrogen-bonding group.

Specific examples of the above-described Formula (1) include, but not limited to, the following:

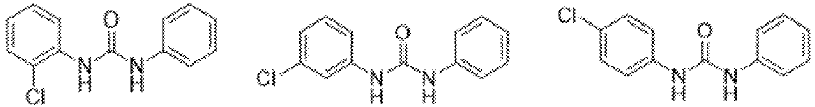

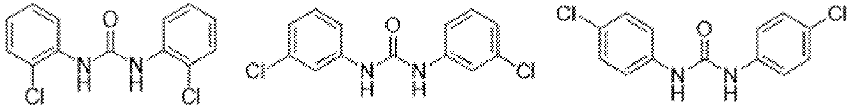

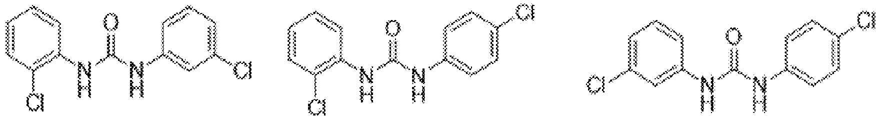

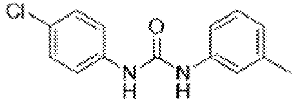

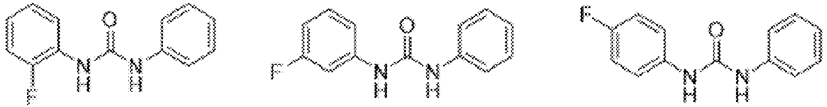

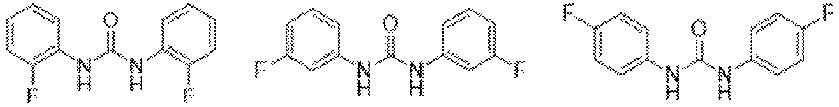

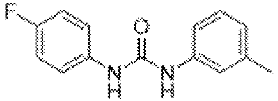

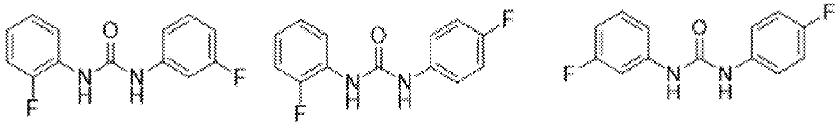

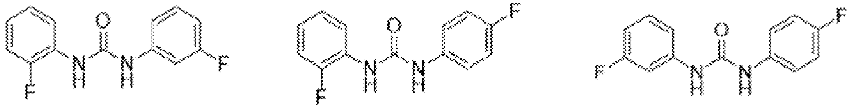

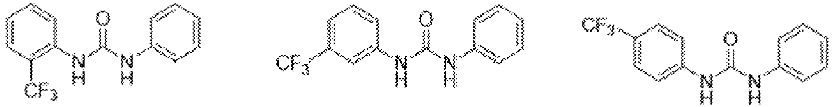

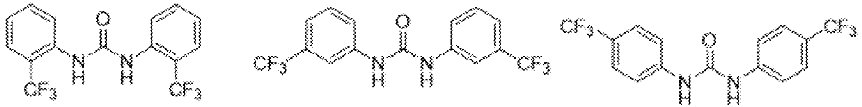

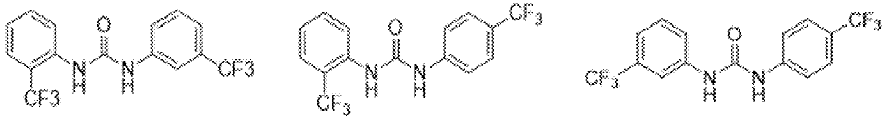

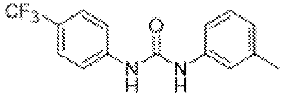

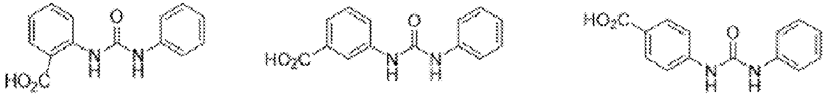

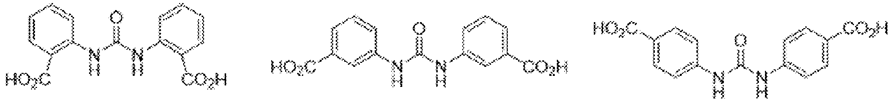

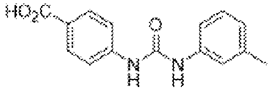

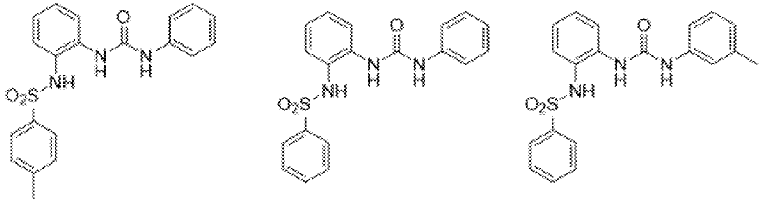

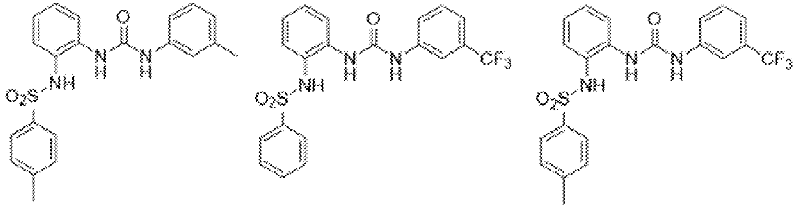

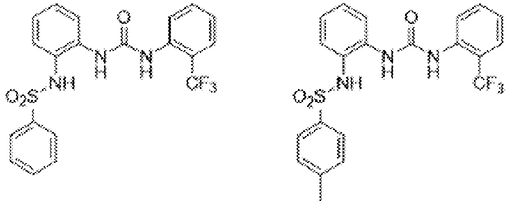

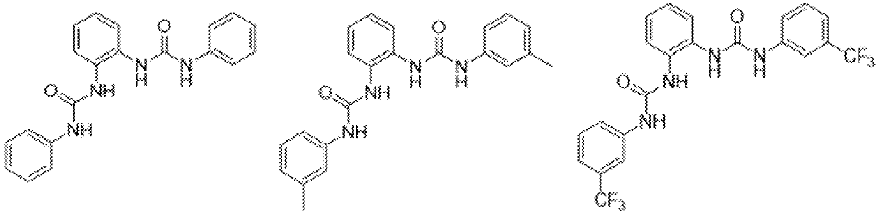

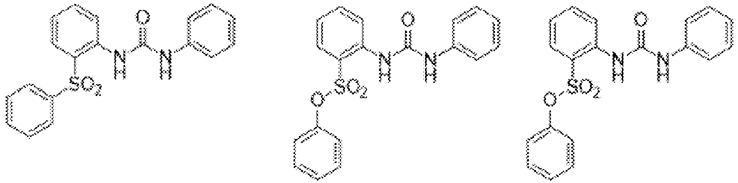

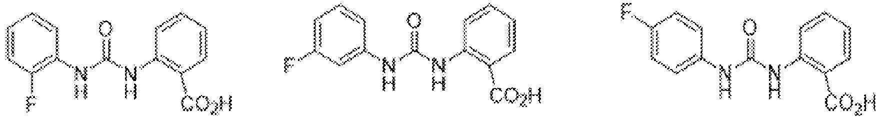

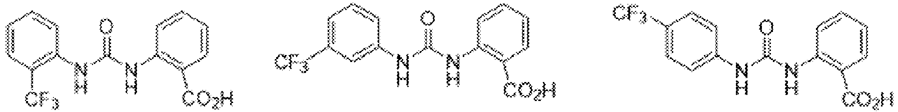

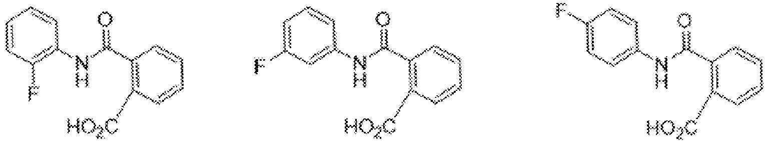

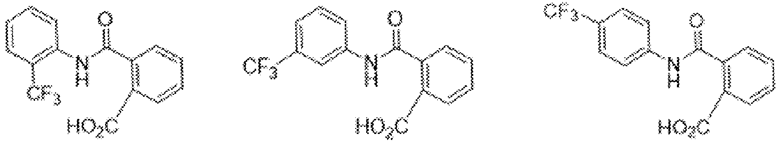

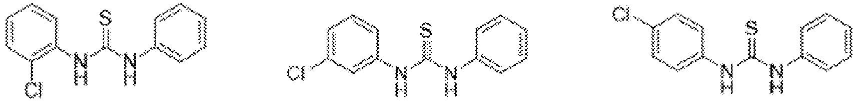

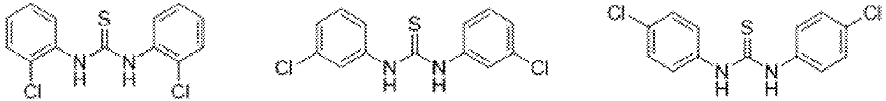

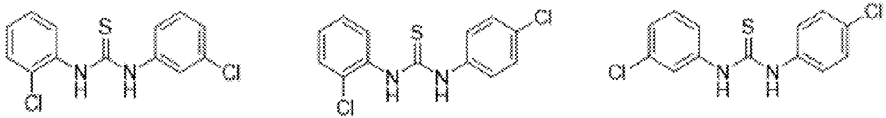

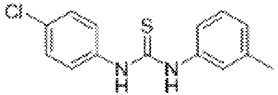

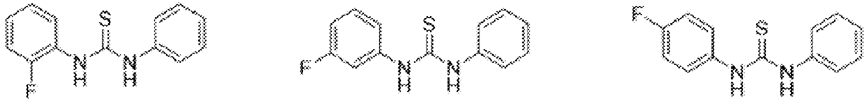

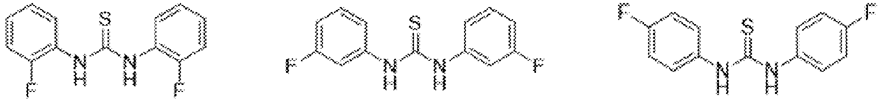

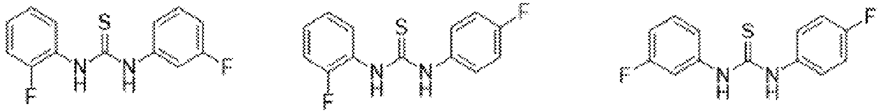

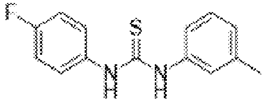

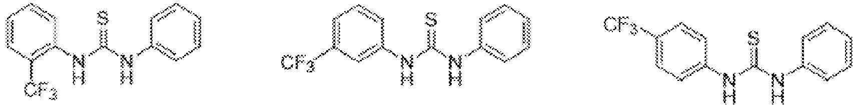

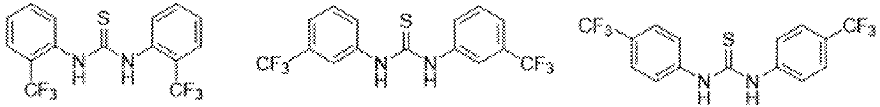

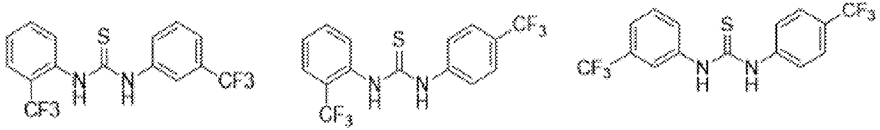

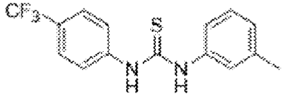

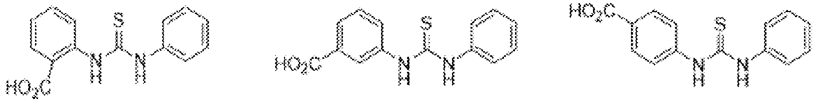

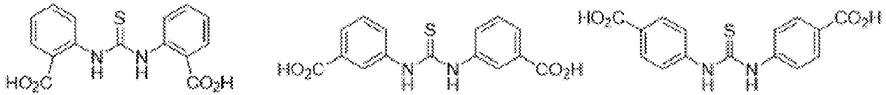

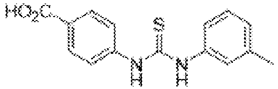

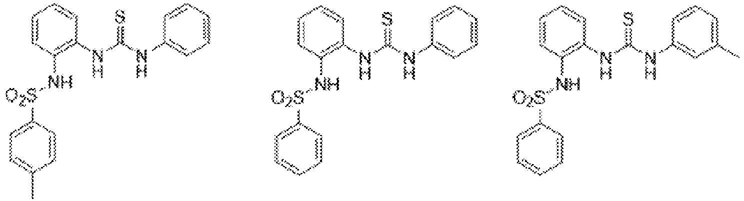

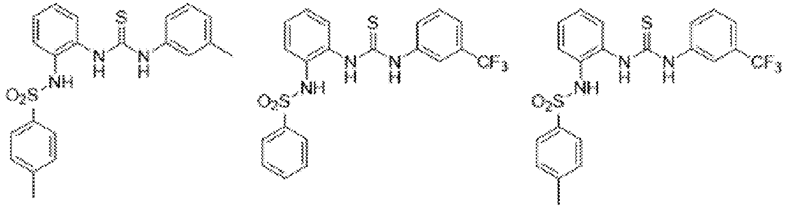

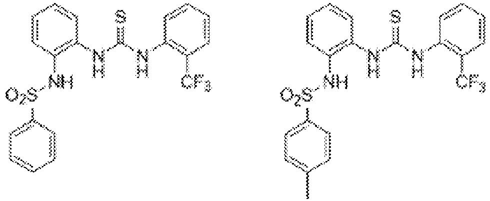

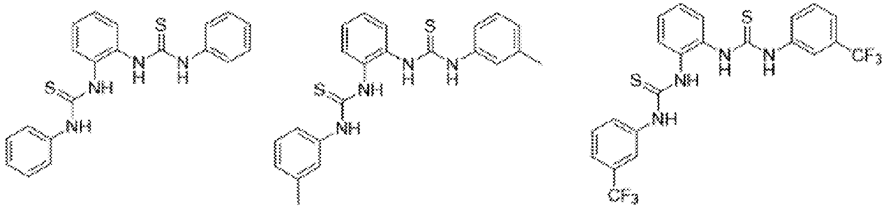

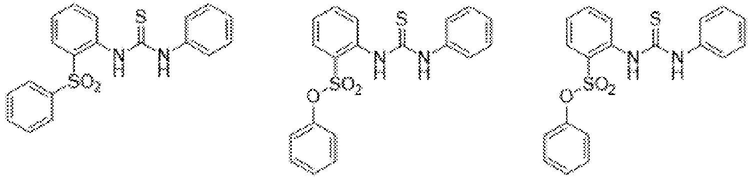

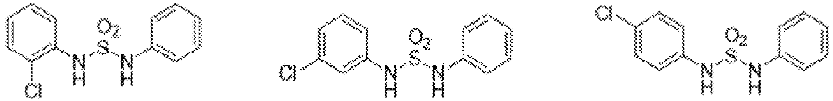

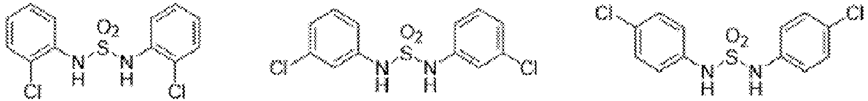

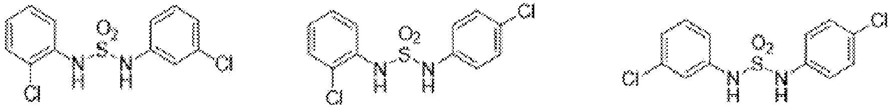

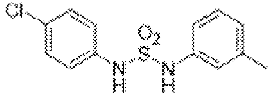

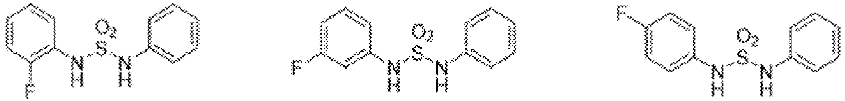

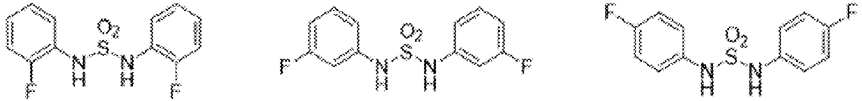

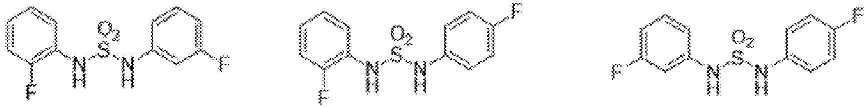

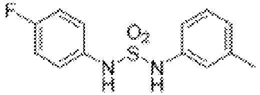

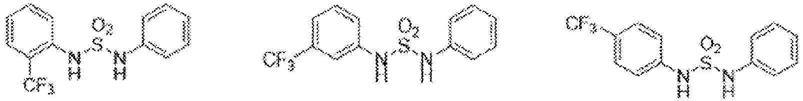

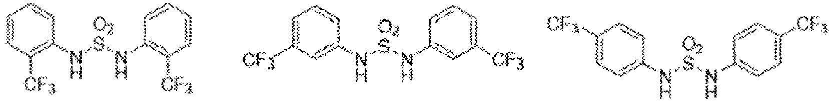

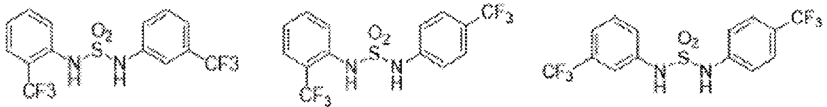

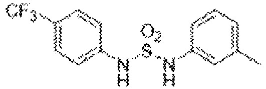

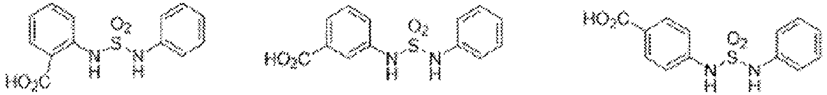

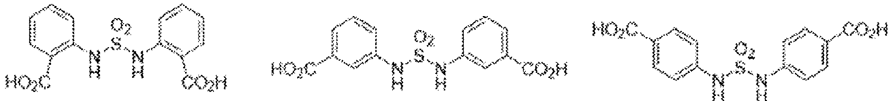

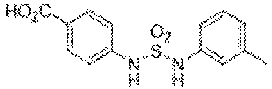

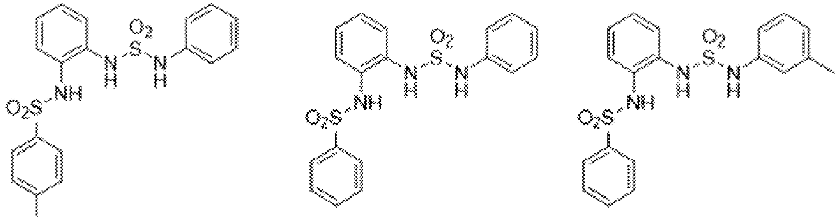

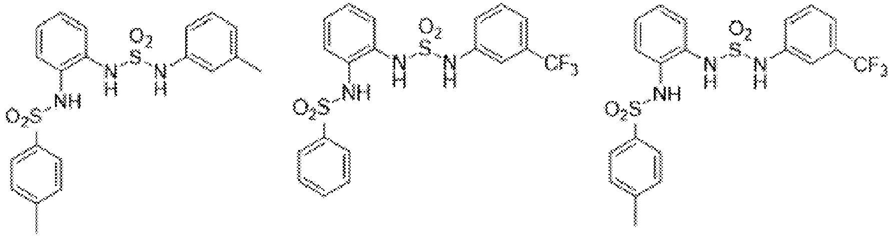

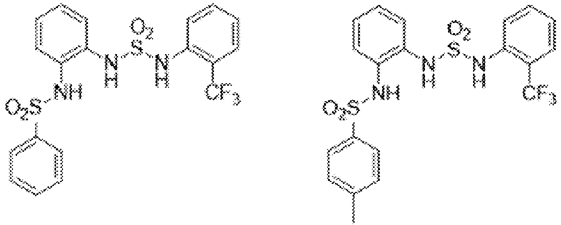

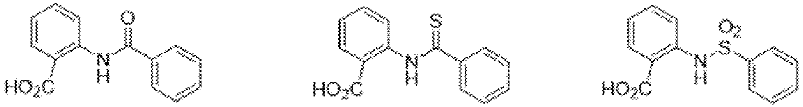

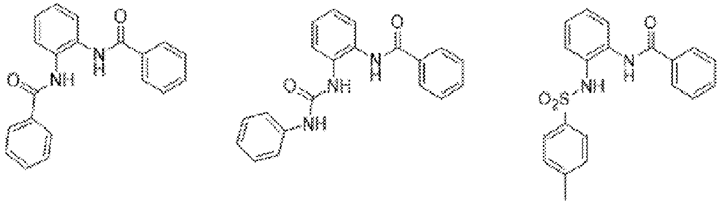

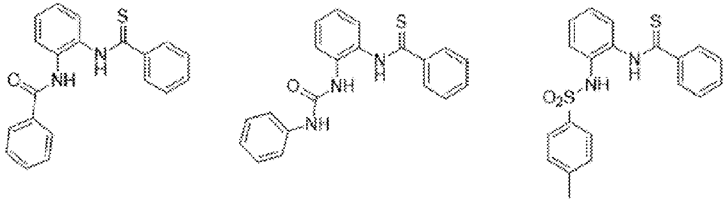

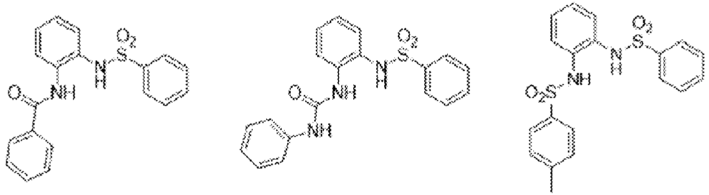

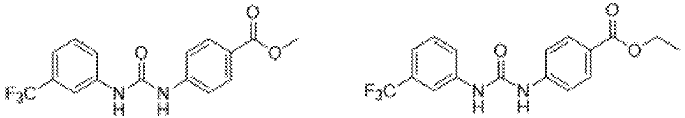

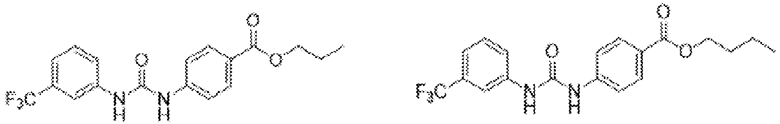

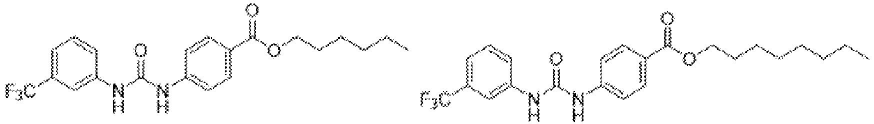

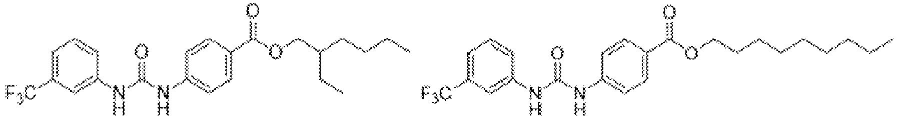

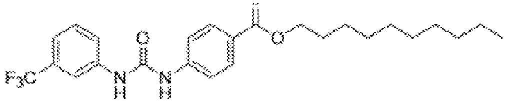

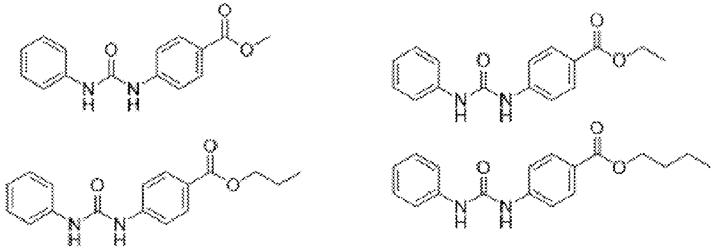

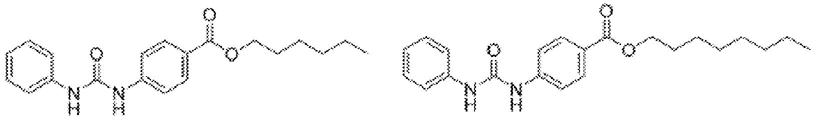

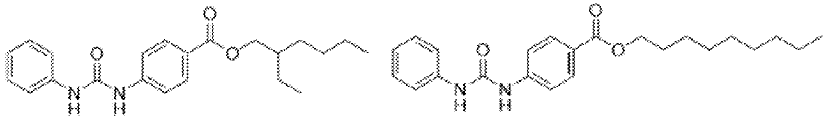

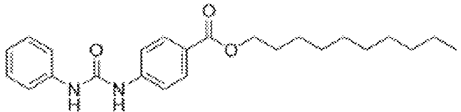

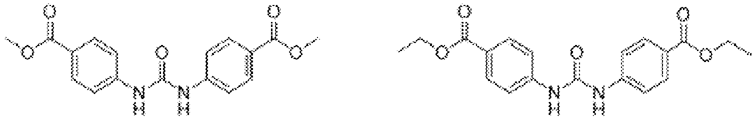

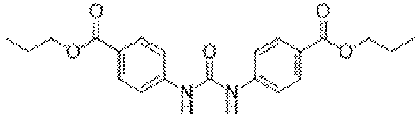

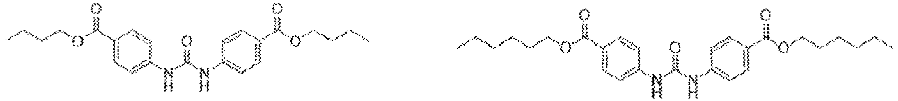

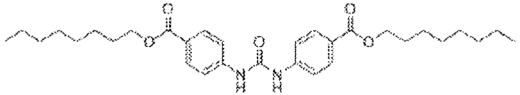

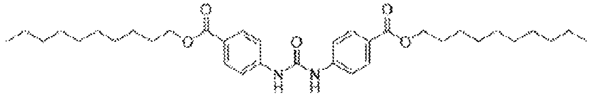

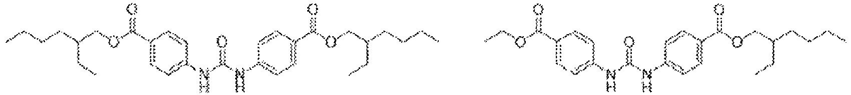

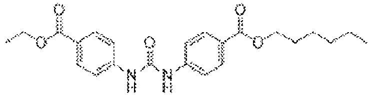

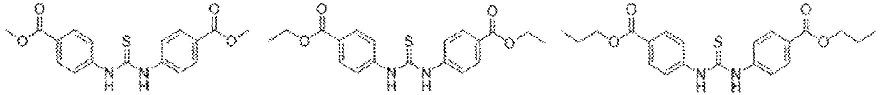

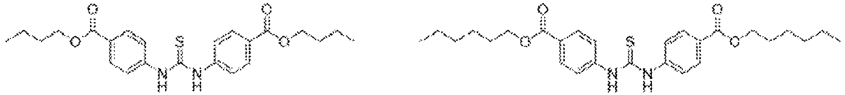

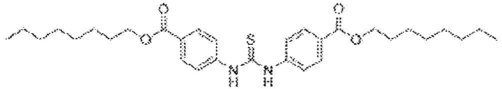

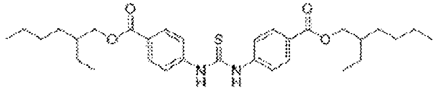

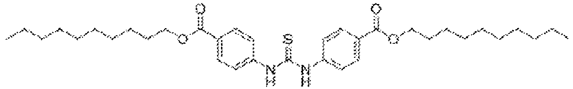

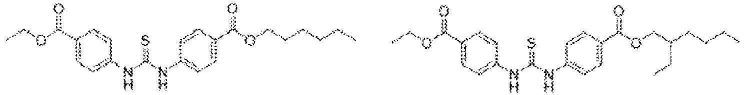

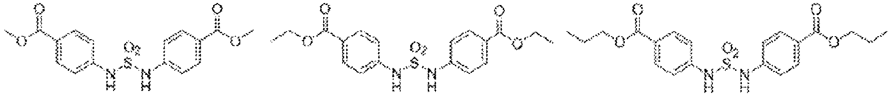

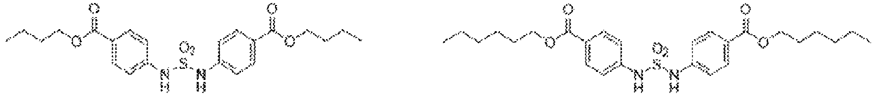

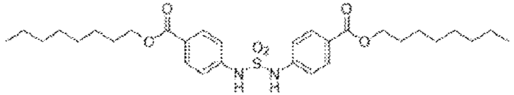

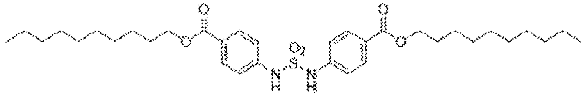

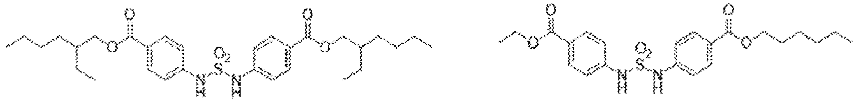

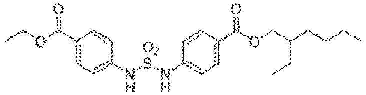

A compound represented by the above-described Formula (1) can be synthesized by a known method (any of the methods described in, for example, Japanese Patent No. 2679459, Japanese Patent No. 4601174, Japanese Patent No. 5887423, and documents (Journal of American Chemical Society, 2016, Volume 138 (Issue 40), p.13314-13325, and Org. Lett., 2016, 18, 3726-3729)), or a modified method thereof.

### [Leuco Dye]

The reversibly thermochromic composition according to one embodiment of the present invention contains a leuco dye. The leuco dye is usually basic, and any known such leuco dye can be used. Specific examples of the leuco dye include conventionally known diphenylmethane phthalides, phenylindolyl phthalides, indolyl phthalides, diphenylmethane azaphthalides, phenylindolyl azaphthalides, fluorans, styrylquinolines, and diazarhodamine lactones.

These leuco dyes (leuco dye precursors) may be used singly, or in combination of two or more kinds thereof. Further, it is preferred to use the color developer in an amount of preferably from 0.1 to 50 parts by weight, more preferably from 0.5 to 20 parts by weight, with respect to 1 part by weight of the leuco dye.

Specific examples of the leuco dye include the following:
3,3-bis(*p*-dimethylaminophenyl)-6-dimethylaminophthalide, 3-(4-diethylaminophenyl)-3-(1-ethyl-2-methylindol-3-yl)phthalide, 3,3-bis(1-*n*-butyl-2-methylindol-3-yl)phthalide, 3,3-bis(2-ethoxy-4-diethylaminophenyl)-4-azaphthalide, 3-[2-ethoxy-4-(*N*-ethylanilino)phenyl]-3-(1-ethyl-2-methylindol-3-yl)-4-azaphthalide, 3,6-diphenylaminofluoran, 3,6-dimethoxyfluoran, 3,6-di-n-butoxyfluoran, 2-methyl-6-(*N*-ethyl-*N*-p-tolylamino)fluoran, 3-chloro-6-cyclohexylaminofluoran, 2-methyl-6-cyclohexylaminofluoran, 2-(2-chloroanilino)-6-di-*n-*butylaminofluoran, 2-(3-trifluoromethylanilino)-6-diethylaminofluoran, 2-(N-methylanilino)-6-(*N*-ethyl-*N*-p-tolylamino)fluoran, 1,3-dimethyl-6-diethylaminofluoran, 2-chloro-3-methyl-6-diethylaminofluoran, 2-anilino-3-methyl-6-diethylaminofluoran, 2-anilino-3-methyl-6-di-*n-*butylaminofluoran, 2-xylidino-3-methyl-6-diethylaminofluoran, 1,2-benz-6-diethylaminofluoran, 1,2-benz-6-(*N*-ethyl-*N-*isobutylamino)fluoran, 1,2-benz-6-(*N*-ethyl-*N-*isoamylamino)fluoran, 2-(3-methoxy-4-dodecoxystyryl)quinoline, spiro[5H-(1)benzopyrano(2,3-d)pyrimidin-5,1'(3'H)isobenzofuran]-3'-one, 2-(diethylamino)-8-(diethylamino)-4-methyl-spiro[5H-(1)benzopyrano(2,3-d)pyrimidin-5,1'(3'H)isobenzofuran]-3'-one, 2-(di-*n-*butylamino)-8-(di-*n*-butylamino)-4-methyl-spiro[5H-(1)benzopyrano(2,3-d)pyrimidin-5,1' (3'H)isobenzofuran]-3'-one, 2-(di-*n*-butylamino)-8-(diethylamino)-4-methyl-spiro[5H-(1)benzopyrano(2,3-d)pyrimidin-5,1' (3'H)isobenzofuran]-3'-one, 2-(di-n-butylamino)-8-(*N*-ethyl-*N*-i-amylamino)-4-methyl-spiro[5H-(1)benzopyrano(2,3-d)pyrimidin-5,1'(3'H)isobenzofuran]-3'-one, 2-(di-n-butylamino)-8-(di-*n-*butylamino)-4-phenyl-spiro[5H-(1)benzopyrano(2,3-d)pyrimidin-5,1'(3'H)isobenzofuran]-3'-one, 3-(2-methoxy-4-dimethylaminophenyl)-3-(1-butyl-2-methylindol-3-yl)-4,5,6,7-tetrachlorophthalide, 3-(2-ethoxy-4-diethylaminophenyl)-3-(1-ethyl-2-methylindol-3-yl)-4,5,6,7-tetrachlorophthalide, and 3-(2-ethoxy-4-diethylaminophenyl)-3-(1-pentyl-2-methylindol-3-yl)-4,5,6,7-tetrachlorophthalide.

Examples of the leuco dye further include pyridine-based, quinazoline-based, and bisquinazoline-based compounds that are effective for developing fluorescent yellow to red colors.

### [Color Change Temperature Regulator]

The reversibly thermochromic composition according to the present embodiment contains a color change temperature regulator. The color change temperature regulator is a substance that reversibly induces an electron transfer reaction between the color developer and the leuco dye.

Any known color change temperature regulator can be used, and specific examples thereof include chain hydrocarbons, alicyclic hydrocarbons, aromatic hydrocarbons, halogenated hydrocarbons, alcohols, esters, ketones, ethers, and acid amides. Thereamong, ones having 8 or more carbon atoms are preferred, and ones having 10 or more carbon atoms are more preferred. The number of carbon atoms is preferably 30 or less.

Specific examples of the above-described esters include compounds represented by the following Formulae (16) to (19) (hereinafter, may be referred to as "compounds (16) to (19)"): 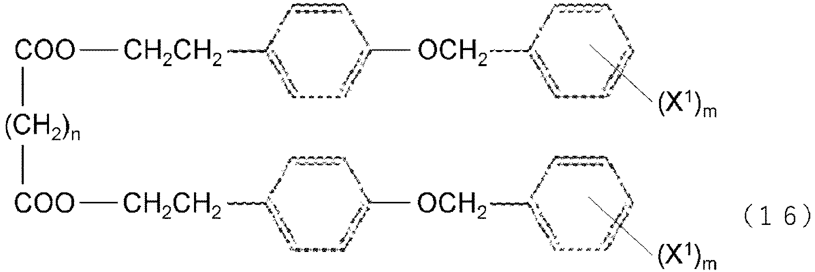 (wherein, X¹ independently represents a hydrogen atom, an alkyl group having 1 to 4 carbon atoms, a methoxy group, or a halogen atom; m independently represents an integer of from 1 to 3; and n represents an integer of from 1 to 8).

Examples of the compound (16) include: diester of malonic acid and 2-[4-(4-chlorobenzyloxy)phenyl)]ethanol; diester of succinic acid and 2-(4-benzyloxyphenyl)ethanol; diester of succinic acid and 2-[4-(3-methylbenzyloxy)phenyl)]ethanol; diester of glutaric acid and 2-(4-benzyloxyphenyl)ethanol; diester of glutaric acid and 2-[4-(4-chlorobenzyloxy)phenyl)]ethanol; diester of adipic acid and 2-(4-benzyloxyphenyl)ethanol; diester of pimelic acid and 2-(4-benzyloxyphenyl)ethanol; diester of suberic acid and 2-(4-benzyloxyphenyl)ethanol; diester of suberic acid and 2-[4-(3-methylbenzyloxy)phenyl)]ethanol; diester of suberic acid and 2-[4-(4-chlorobenzyloxy)phenyl)]ethanol; diester of suberic acid and 2-[4-(2,4-dichlorobenzyloxy)phenyl)]ethanol; diester of azelaic acid and 2-(4-benzyloxyphenyl)ethanol; diester of sebacic acid and 2-(4-benzyloxyphenyl)ethanol; diester of 1,10-decanedicarboxylic acid and 2-(4-benzyloxyphenyl)ethanol; diester of 1,18-octadecanedicarboxylic acid and 2-(4-benzyloxyphenyl)ethanol; and diester of 1,18-octadecanedicarboxylic acid and 2-[4-(2-methylbenzyloxy)phenyl)]ethanol. 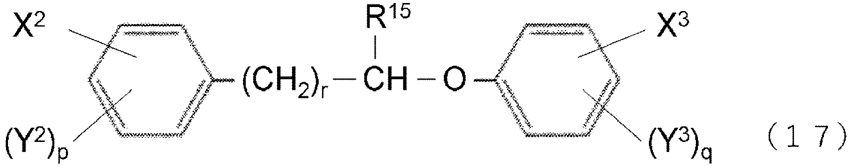 (wherein, R¹⁵ represents a hydrogen atom or a methyl group; r represents an integer of from 0 to 2; one of X² and X³ represents -(CH₂)ₙOCOR¹⁶ or -(CH₂)ₙCOOR¹⁶ while the other represents a hydrogen atom; n represents an integer of from 0 to 2; R¹⁶ represents an alkyl or alkenyl group having 4 or more carbon atoms; Y² and Y³ each independently represent a hydrogen atom, an alkyl group having 1 to 4 carbon atoms, a methoxy group, or a halogen atom; and p and q each independently represent an integer of from 1 to 3)

In the above-described Formula (17), when R¹⁵ is a hydrogen atom, a reversibly thermochromic composition having a larger hysteresis width can be obtained, which is preferred. It is more preferred that R¹⁵ is a hydrogen atom, and m is 0.

Among compounds (17), a compound represented by the following Formula (18) is more preferred: 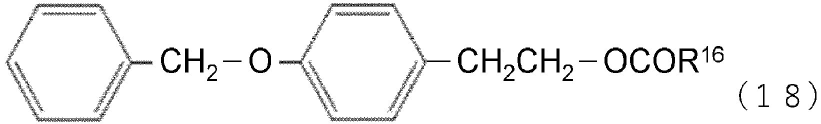 (wherein, R¹⁶ represents an alkyl or alkenyl group having 7 or more carbon atoms, preferably an alkyl group having 9 to 24 carbon atoms, more preferably an alkyl group having 9 to 20 carbon atoms).

Examples of the compound (18) include 4-benzyloxyphenylethyl octanoate, 4-benzyloxyphenylethyl nonanoate, 4-benzyloxyphenylethyl decanoate, 4-benzyloxyphenylethyl undecanoate, 4-benzyloxyphenylethyl dodecanoate, 4-benzyloxyphenylethyl tridecanoate, 4-benzyloxyphenylethyl tetradecanoate, 4-benzyloxyphenylethyl pentadecanoate, 4-benzyloxyphenylethyl hexadecanoate, 4-benzyloxyphenylethyl heptadecanoate, and 4-benzyloxyphenylethyl octadecanoate. 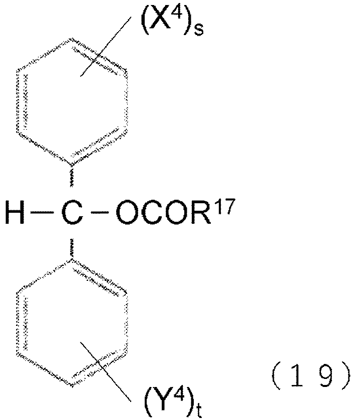 (wherein, R¹⁷ represents an alkyl or alkenyl group having 7 or more carbon atoms; s and t each independently represent an integer of from 1 to 3; and X⁴ and Y⁴ each independently represent a hydrogen atom, an alkyl group having 1 to 4 carbon atoms, an alkoxy group having 1 to 4 carbon atoms, or a halogen atom)

Examples of the compound (19) include 1,1-diphenylmethyl octanoate, 1,1-diphenylmethyl nonanoate, 1,1-diphenylmethyl decanoate, 1,1-diphenylmethyl undecanoate, 1,1-diphenylmethyl dodecanoate, 1,1-diphenylmethyl tridecanoate, 1,1-diphenylmethyl tetradecanoate, 1,1-diphenylmethyl pentadecanoate, 1,1-diphenylmethyl hexadecanoate, 1,1-diphenylmethyl heptadecanoate, and 1,1-diphenylmethyl octadecanoate.

These color change temperature regulators may be used singly, or in combination of two or more kinds thereof.

The color change temperature regulator is used in an amount of preferably from 1 to 800 parts by weight, more preferably from 5 to 200 parts by weight, with respect to 1 part by weight of the leuco dye.

By heating the reversibly thermochromic composition to a temperature higher than the melting point of the color change temperature regulator, a colored state induced by the electron transfer reaction between the leuco dye and the color developer can be changed into a decolored state.

### [Other Additives]

The reversibly thermochromic composition according to the present embodiment may also contain a color developer other than the compound (1) (hereinafter, may be referred to as "other color developer"), a sensitizer, a stabilizer, a crosslinking agent, a pigment, a lubricant, and the like.

### <Other Color Developer>

The reversibly thermochromic composition may also contain other color developer within a range that does not impair the effects of the present invention. The other color developer is not particularly limited and any known color developer can be used; however, it is preferably an electron-accepting color developer. The other color developer may be used singly, or in combination of two or more kinds thereof. When other color developer is used, the amount thereof is preferably from 1 to 5,000 parts by weight, more preferably from 5 to 1,000 parts by weight, still more preferably from 10 to 500 parts by weight, with respect to 100 parts by weight of the color developer containing the compound represented by Formula (1).

By using other color developer, a reversibly thermochromic composition which not only maintains a high color developing sensitivity but also exhibits an improved decoloring property can be obtained.

Examples of the other color developer include monophenols and polyphenols. These color developers may further have a substituent, such as an alkyl group, an aryl group, an acyl group, an alkoxycarbonyl group, a carboxy group or an ester thereof, an amide group, or a halogen group. Examples of the other color developer further include bisphenols, trisphenols, and phenol-aldehyde condensation resins. The other color developer may also be a metal salt of a phenolic hydroxyl group-containing compound.

Specific examples include:
phenol, *o*-cresol, *t*-butyl catechol, nonylphenol, *n-*octylphenol, *n*-dodecylphenol, *n*-stearylphenol, *p*-chlorophenol, *p*-bromophenol, *o*-phenylphenol, *n*-butyl *p*-hydroxybenzoate, n-octyl *p*-hydroxybenzoate, resorcin, dodecyl gallate, 2,2-bis(4'-hydroxyphenyl)propane, 4,4-dihydroxydiphenyl sulfone, 1,1-bis(4'-hydroxyphenyl)ethane, 2,2-bis(4'-hydroxy-3-methylphenyl)propane, bis(4-hydroxyphenyl)sulfide, 1-phenyl-1,1-bis(4'-hydroxyphenyl)ethane, 1,1-bis(4'-hydroxyphenyl)-3-methylbutane, 1,1-bis(4'-hydroxyphenyl)-2-methylpropane, 1,1-bis(4'-hydroxyphenyl)-*n*-hexane, 1,1-bis(4'-hydroxyphenyl)-*n-*heptane, 1,1-bis(4'-hydroxyphenyl)-*n*-octane, 1,1-bis(4'-hydroxyphenyl)-*n*-nonane, 1,1-bis(4'-hydroxyphenyl)-*n*-decane, 1,1-bis(4'-hydroxyphenyl)-*n*-dodecane, 2,2-bis(4'-hydroxyphenyl)butane, 2,2-bis(4'-hydroxyphenyl)ethyl propionate, 2,2-bis(4'-hydroxyphenyl)-4-methylpentane, 2,2-bis(4'-hydroxyphenyl)hexafluoropropane, 2,2-bis(4'-hydroxyphenyl)-*n*-heptane, and 2,2-bis(4'-hydroxyphenyl)-*n-*nonane.

When a phenolic hydroxyl group-containing compound having at least three benzene rings and a molecular weight of 250 or more, preferably 250 or more and 500 or less, or a phenolic hydroxyl group-containing compound represented by the following Formula (20) is used as the above-described phenolic hydroxyl group-containing compound, the change in color between a colored state and another colored state can be made more sensitive. 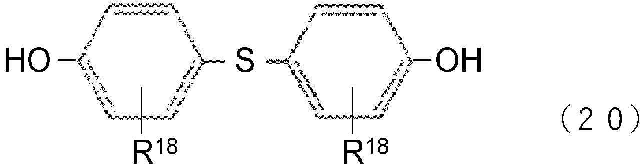 (wherein, R¹⁸ represents an alkyl group having 1 to 8 carbon atoms)

Examples of the phenolic hydroxyl group-containing compound having at least three benzene rings and a molecular weight of 250 or more include 4,4',4''-methylidene-trisphenol, 2,6-bis[(2-hydroxy-5-methylphenol)methyl]-4-methylphenol, 4,4'-[1-[4-[1-(4-hydroxyphenyl)-1-methylethyl]phenyl]ethylidene]bisphenol, 4,4',4"-ethylidene-tris[2-methylphenol], 4,4'-[(2-hydroxyphenyl)methylene]bis[2,3,6-triphenylphenol], 2,2-methylene-bis[6-[(2-hydroxy-5-methylphenyl)methyl]-4-methylphenol], 2,4,6-tris(4-hydroxyphenylmethyl)1,3-benzenediol, 4,4',4' '-ethylidene-trisphenol, 4,4'-[(4-hydroxyphenyl)methylene]bis[2-methylphenol], 4,4'-[(4-hydroxyphenyl)methylene]bis[2,6-dimethylphenol], 4,4'-[(4-hydroxy-3-methoxyphenyl)methylene]bis[2,6-dimethylphenol], 2,4-bis[(5-methyl-2-hydroxyphenyl)methyl]-6-cyclohexylphenol, 4,4'-[1-[4-[1-(4-hydroxy-3-methylphenol)-1-methylethyl]phenyl]ethylidene]bis[2-methylphenol], 4,4'-[(4-hydroxyphenyl)methylene]bis[2-cyclohexyl-5-methylphenol], 4,6-bis[(4-hydroxyphenyl)methyl]-1,3-benzenediol, 4,4'-[(3,4-dihydroxyphenyl)methylene]bis[2,6-dimethylphenol], 4,4'-(1-phenylethylidene)bisphenol, 5,5'-(1-methylethylidene)bis[1-phenyl-2-ol], 4,4'-[1-[4-[1-(4-hydroxyphenyl)-1-methylethyl]phenyl]ethylidene]bisphenol, 4,4'-(phenylmethylene)bisphenol, 4,4'-[1,4-phenylene-bis(1-methylethylidene)]bis[2-methylphenol], and 5,5'-(1,1-cyclohexylidene)bis-[1-biphenyl-2-ol].

Examples of the phenolic hydroxyl group-containing compound represented by Formula (20) include bis(3-methyl-4-hydroxyphenyl)sulfide, bis(3,5-dimethyl-4-hydroxyphenyl), bis(3-ethyl-4-hydroxyphenyl)sulfide, bis(3,5-diethyl-4-hydroxyphenyl)sulfide, bis(3-propyl-4-hydroxyphenyl)sulfide, bis(3,5-dipropyl-4-hydroxyphenyl)sulfide, bis(3-t-butyl-4-hydroxyphenyl)sulfide, bis(3,5-*t*-butyl-4-hydroxyphenyl)sulfide, bis(3-pentyl-4-hydroxyphenyl)sulfide, bis(3-hexyl-4-hydroxyphenyl)sulfide, bis(3-heptyl-4-hydroxyphenyl)sulfide, and bis(5-octyl-2-hydroxyphenyl)sulfide.

Although the above-described phenolic hydroxyl group-containing compounds allow most effective thermochromic characteristics to be expressed, the other color developer may also be, for example, a compound selected from aromatic carboxylic acids, aliphatic carboxylic acids having 2 to 5 carbon atoms, carboxylic acid metal salts, acidic phosphoric acid esters and metal salts thereof, and 1,2,3-triazole and derivatives thereof.

The reversibly thermochromic composition according to one embodiment of the present invention may be encapsulated in a microcapsule and thereby used as a microcapsule pigment. When encapsulated in a microcapsule, the functions of the reversibly thermochromic composition do not deteriorate even if the reversibly thermochromic composition comes into contact with a chemically active substance, such as an acidic substance, a basic substance, or a peroxide, or other solvent component. In addition, the thermal stability can be maintained and the constitution of the reversibly thermochromic composition can be maintained to be the same, so that the same actions and effects are exerted under various usage conditions.

A concrete mode of the microcapsule pigment is not particularly limited, and reference can be made to, for example, Japanese Patent No. 6851787. Specifically, the microcapsule pigment can be produced by a known interfacial polycondensation method, *in situ* polymerization method, submerged curing-coating method, phase separation method from an aqueous solution, phase separation method from an organic solvent, melting dispersion cooling method, air suspension coating method, spray drying method, or the like.

The microcapsule pigment has an average particle size in a range of preferably from 0.1 to 100 µm, more preferably from 3 to 30 um. The particle size and the particle size distribution can be measured using a laser diffraction/scattering particle size distribution analyzer [LA-300, manufactured by Horiba, Ltd.] and, based on the thus measured values, the average particle size (median diameter) can be calculated in terms of volume.

The composition ratio of an encapsulated material and a wall membrane that constitute the microcapsule pigment (encapsulated material:wall membrane) is preferably in a range of from 7:1 to 1:1 (mass ratio). By controlling the composition ratio to be in this range, a reduction in the color density and the clarity at the time of color development can be inhibited. The composition ratio of the encapsulated material and the wall membrane (encapsulated material:wall membrane) is more preferably from 6:1 to 1:1 (mass ratio).

The reversibly thermochromic composition according to one embodiment of the present invention and the microcapsule pigment can be used in, for example, a printing ink, inks for a writing utensil, and a paint. Specifically, the reversibly thermochromic composition and the microcapsule pigment can be used for the formation of a reversibly thermochromic layer on an arbitrary support or dispersed in a support by a printing means such as screen printing, offset printing, gravure printing, coater printing, pad printing, or transcription, or by a coating method such as brush coating, spray coating, electrostatic coating, electrodeposition coating, flow coating, roller coating, or dip coating.

Further, the reversibly thermochromic composition or the microcapsule pigment may be contained in a writing utensil.

The writing utensil includes: a shaft tube which accommodates the reversibly thermochromic composition or the microcapsule pigment; and a pen body from which the reversibly thermochromic composition or the microcapsule pigment contained in the shaft tube is drawn out. The pen body is, for example, a marking pen body, a ball-point pen body, or a brush pen body. Examples of the marking pen body include marking tips, such as a fiber tip, a felt tip, and a plastic tip. Examples of the ball-point pen body include a ball-point pen tip.

Moreover, the reversibly thermochromic composition or the microcapsule pigment may be comprised in a toy.

Specific examples of the toy include: doll- or animal-figured toys; hair for doll- or animal-figured toys; doll accessories, such as house, furniture, clothes, hats, bags, and shoes for dolls; accessory toys; stuffed dolls; painting toys; picture books for toys; puzzle toys such as jigsaw puzzles; brick toys; block toys; clay toys; fluid toys; spinning tops; kites; musical instrument toys; cooking toys; gun toys; capturing toys; background toys; and toys imitating vehicles, animals, plants, buildings, and food articles.

A mode of incorporating the reversibly thermochromic composition or the microcapsule pigment into the above-described toy is not particularly limited and, by the above-described printing means, coating means, or the like, the reversibly thermochromic composition or the microcapsule pigment may be used for the formation of a reversibly thermochromic layer on the surface of the toy, or may be dispersed in a material constituting the toy.

A method of using the above-described toy is not particularly limited and, for example, hot water or cold water may be brought into contact with the toy to cause the reversibly thermochromic composition to change in color.

### EXAMPLES

The present invention will now be described in detail by way of Examples and Comparative Examples; however, the present invention is not limited to the below-described Examples. It is noted here that, unless otherwise specified, "part(s)" and "%" in the below-described Examples and Comparative Examples denote "part(s) by weight" and "% by weight", respectively.

### <Synthesis Example 1>

### Synthesis of 1,3-di(3-(trifluoromethyl)phenyl)urea

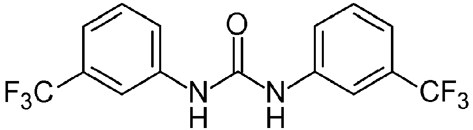

Referring to a known document (Journal of American Chemical Society, 2016, Volume 138 (Issue 40), p.13314-13325), a target compound was obtained by the same operations as in Synthesis Example of 1,3-di-*m*-tolylurea, except that 3-(trifluoromethyl)phenyl isocyanate (purchased from Tokyo Chemical Industry Co., Ltd.) was used in place of *m*-tolyl isocyanate at the same molar ratio, and 3-(trifluoromethyl)aniline (purchased from Tokyo Chemical Industry Co., Ltd.) was used in place of m-toluidine at the same molar ratio. The thus obtained target compound had a melting point of 201 to 202°C.

The chemical shifts (δ ppm) in a proton NMR spectrum (400 MHz) measured in a deuterated DMSO solvent were as follows:
δ: 7.33 (d, 2H), 7.52 (t, 2H), 7.60 (d, 2H), 8.02 (s, 2H), 9.18 (s, 2H)

### <Synthesis Example 2>

### Synthesis of 1-(3-(trifluoromethyl)phenyl)-3-(2-(trifluoromethyl)phenyl)urea

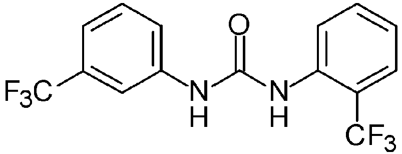

Referring to a known document (Journal of American Chemical Society, 2016, Volume 138 (Issue 40), p.13314-13325), a target compound was obtained by the same operations as in Synthesis Example of 1,3-di-*m*-tolylurea, except that 3-(trifluoromethyl)phenyl isocyanate (purchased from Tokyo Chemical Industry Co., Ltd.) was used in place of *m*-tolyl isocyanate at the same molar ratio, and 2-(trifluoromethyl)aniline (purchased from Tokyo Chemical Industry Co., Ltd.) was used in place of *m*-toluidine at the same molar ratio. The thus obtained target compound had a melting point of 172 to 173°C.

The chemical shifts (δ ppm) in a proton NMR spectrum (400 MHz) measured in a deuterated DMSO solvent were as follows:
δ: 7.32-7.34 (m, 2H), 7.53-7.55 (m, 2H), 7.65-7.71 (m, 2H), 7.92 (d, 1H), 8.03 (s, 1H), 8.17 (s, 1H)

### <Synthesis Example 3>

### Synthesis of 1-(3-(trifluoromethyl)phenyl)-3-(2-carboxyphenyl) urea

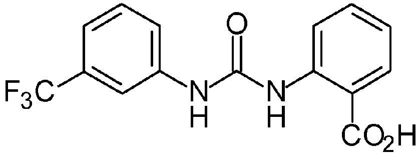

Referring to a known document (Journal of American Chemical Society, 2016, Volume 138 (Issue 40), p.13314-13325), a target compound was obtained by the same operations as in Synthesis Example of 1,3-di-*m*-tolylurea, except that 3-(trifluoromethyl)phenyl isocyanate (purchased from Tokyo Chemical Industry Co., Ltd.) was used in place of *m*-tolyl isocyanate at the same molar ratio, and 2-aminobenzoic acid (purchased from Tokyo Chemical Industry Co., Ltd.) was used in place of m-toluidine at the same molar ratio. The thus obtained target compound had a melting point of 162°C.

The chemical shifts (δ ppm) in a proton NMR spectrum (400 MHz) measured in a deuterated DMSO solvent were as follows:
δ: 7.01-7.05 (m, 1H), 7.28 (d, 1H, *J* = 7.8 Hz), 7.46-7.55 (m, 2H), 7.67 (d, 1H, *J* = 8.0 Hz), 7.93 (d, 1H, *J* = 7.6 Hz), 7.98 (s, 1H), 8.35 (d, 1H, *J* = 8.8 Hz), 10.15 (s, 1H), 10.46 (s, 1H)

### <Synthesis Example 4>

### Synthesis of 1,1'-(1,2-phenylene)bis(3-(3-(trifluoromethyl)phenyl)urea)

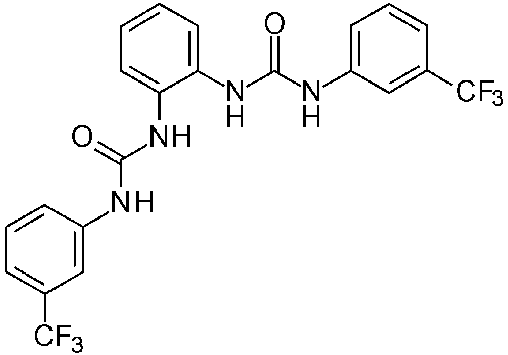

Referring to a known document (Journal of American Chemical Society, 2016, Volume 138 (Issue 40), p.13314-13325), a target compound was obtained by the same operations as in Synthesis Example of 1,3-di-*m*-tolylurea, except that 3-(trifluoromethyl)phenyl isocyanate (purchased from Tokyo Chemical Industry Co., Ltd.) was used in place of *m*-tolyl isocyanate at the same molar ratio, and 1,2-diaminobenzene (purchased from Tokyo Chemical Industry Co., Ltd.) was used in place of *m*-toluidine at a half-equivalent molar ratio. The thus obtained target compound had a melting point of 215 to 216°C.

The chemical shifts (δ ppm) in a proton NMR spectrum (400 MHz) measured in a deuterated DMSO solvent were as follows:
δ: 6.27-6.30 (m, 2H), 6.47 (d, 2H), 6.66 (t, 2H), 6.74-6.76 (m, 4H), 7.18 (s, 2H), 7.31 (s, 2H)

### <Synthesis Example 5>

### Synthesis of 4-methyl-N-(2-(3-(trifluoromethyl)phenyl)urea)benzenesulfonamide

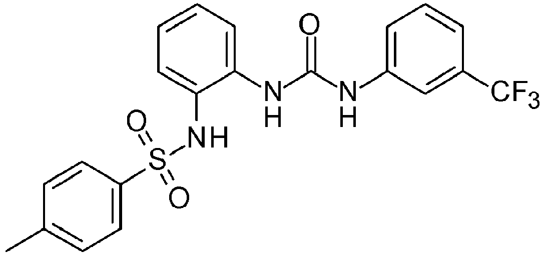

A target compound was obtained by the same operations as in Japanese Patent No. 5887423 using 1,2-diaminobenzene (available from Tokyo Chemical Industry Co., Ltd. and the like), 3-(trifluoromethyl)phenyl isocyanate (available from Tokyo Chemical Industry Co., Ltd. and the like), and p-toluene sulfonyl chloride (available from Tokyo Chemical Industry Co., Ltd. and the like) as raw materials.

The chemical shifts (δ ppm) in a proton NMR spectrum (400 MHz) measured in a deuterated DMSO solvent were as follows:
δ: 2.32 (s, 3H), 6.48 (d, 1H), 6.81 (t, 1H), 7.18 (t, 1H), 7.34 (t, 3H), 7.54-7.59 (m, 4H), 8.00 (d, 2H), 8.31 (s, 1H), 9.51 (s, 1H), 9.88 (s, 1H)

### <Synthesis Example 6>

### Synthesis of N-(2-(3-phenylureido)phenyl)benzenesulfonamide

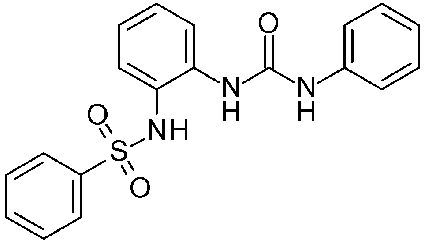

A target compound was obtained by the same operations as in Japanese Patent No. 5887423 using 1,2-diaminobenzene (available from Tokyo Chemical Industry Co., Ltd. and the like), phenyl isocyanate (available from Tokyo Chemical Industry Co., Ltd. and the like), and benzene sulfonyl chloride (available from Tokyo Chemical Industry Co., Ltd. and the like) as raw materials.

The chemical shifts (δ ppm) in a proton NMR spectrum (400 MHz) measured in a deuterated DMSO solvent were as follows:
δ: 6.42 (d, 1H), 6.75 (t, 1H), 6.98 (t, 1H), 7.19 (t, 1H), 7.30 (t, 2H), 7.48 (d, 2H), 7.57 (t, 2H), 7.65 (d, 1H), 7.70 (d, 2H), 8.02 (d, 1H), 8.31 (s, 1H), 9.55 (d, 2H)

### <Synthesis Example 7>

### Synthesis of N,N'-bis(4-fluorophenyl)sulfamide

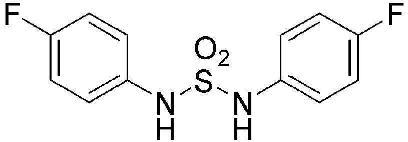

A target compound was obtained by the same operations as *N*,*N*'-diphenylsulfamide described in a document (Org. Lett., 2016, 18, p.3726-3729), except that 4-fluoroaniline (purchased from Tokyo Chemical Industry Co., Ltd.) was used in place of aniline.

The chemical shifts (δ ppm) in a proton NMR spectrum (400 MHz) measured in a deuterated chloroform solvent were as follows:
δ: 6.66 (brs, 2H), 6.97-7.03 (m, 4H), 7.04-7.08 (m, 4H)

### <Synthesis Example 8>

### Synthesis of N,N'-bis(3-(trifluoromethyl)phenyl)sulfamide

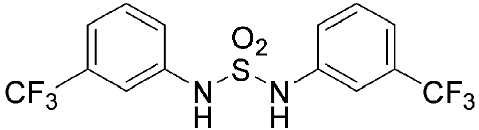

A target compound was obtained by the same operations as *N*,*N*'-diphenylsulfamide described in a document (Org. Lett., 2016, 18, p.3726-3729), except that 3-(trifluoromethyl)aniline (purchased from Tokyo Chemical Industry Co., Ltd.) was used in place of aniline.

The chemical shifts (δ ppm) in a proton NMR spectrum (400 MHz) measured in a deuterated chloroform solvent were as follows:
δ: 7.09 (brs, 2H), 7.26-7.31 (m, 4H), 7.40-7.45 (m, 4H)

### <Synthesis Example 9>

### Synthesis of 1-(3-(trifluoromethyl)phenyl)-3-(4-(methoxycarbonyl)phenyl)urea

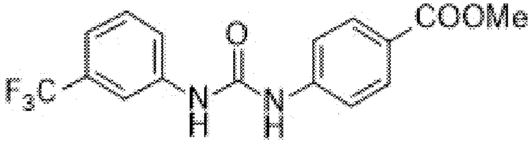

Referring to a known document (Journal of American Chemical Society, 2016, Volume 138 (Issue 40), p.13314-13325), a target compound was obtained by the same operations as in Synthesis Example of 1,3-di-*m*-tolylurea, except that 3-(trifluoromethyl)phenyl isocyanate (purchased from Tokyo Chemical Industry Co., Ltd.) was used in place of *m*-tolyl isocyanate at the same molar ratio, and methyl 4-aminobenzoate (purchased from Tokyo Chemical Industry Co., Ltd.) was used in place of *m*-toluidine at the same molar ratio. The thus obtained target compound had a melting point of 182 to 183°C.

The chemical shifts (δ ppm) in a proton NMR spectrum (400 MHz) measured in a deuterated DMSO solvent were as follows:
δ: 3.83 (s, 3H), 7.35 (d, 1H), 7.52 (t, 1H), 7.6-7.65 (m, 3H), 7.91 (d, 2H), 8.03 (s, 1H), 9.17 (s, 1H), 9.22 (s, 1H)

### <Synthesis Example 10>

### Synthesis of 1-(3-(trifluoromethyl)phenyl)-3-(4-(butoxycarbonyl) phenyl) urea

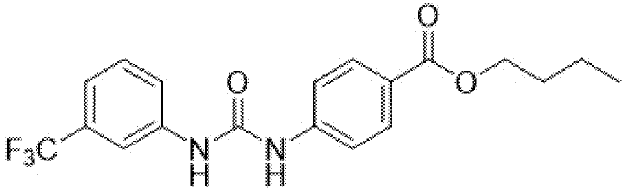

Referring to a known document (Journal of American Chemical Society, 2016, Volume 138 (Issue 40), p.13314-13325), a target compound was obtained by the same operations as in Synthesis Example of 1,3-di-*m*-tolylurea, except that 3-(trifluoromethyl)phenyl isocyanate (purchased from Tokyo Chemical Industry Co., Ltd.) was used in place of *m*-tolyl isocyanate at the same molar ratio, and butyl 4-aminobenzoate (purchased from Tokyo Chemical Industry Co., Ltd.) was used in place of *m*-toluidine at the same molar ratio. The thus obtained target compound had a melting point of 167 to 170°C.

The chemical shifts (δ ppm) in a proton NMR spectrum (400 MHz) measured in a deuterated DMSO solvent were as follows:
δ: 0.93 (t, 3H, *J* = 7.4 Hz), 1.35-1.46 (m, 2H), 1.62-1.72 (m, 2H), 4.24 (t, 2H, 6.6 Hz), 7.34 (d, 1H, *J* = 7.6 Hz), 7.53 (t, 1H), 7.57-7.63 (m, 3H), 7.90 (d, 2H, *J* = 8.8 Hz), 8.02 (s, 1H), 9.15 (s, 1H), 9.21 (s, 1H)

### <Synthesis Example 11>

### Synthesis of 1-(4-fluorophenyl)-3-(4-(butoxycarbonyl) phenyl) urea

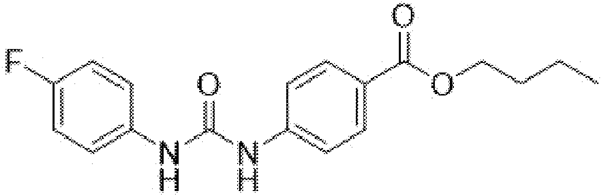

Referring to a known document (Journal of American Chemical Society, 2016, Volume 138 (Issue 40), p.13314-13325), a target compound was obtained by the same operations as in Synthesis Example of 1,3-di-*m*-tolylurea, except that 4-fluorophenyl isocyanate (purchased from Tokyo Chemical Industry Co., Ltd.) was used in place of *m*-tolyl isocyanate at the same molar ratio, and butyl 4-aminobenzoate (purchased from Tokyo Chemical Industry Co., Ltd.) was used in place of m-toluidine at the same molar ratio. The thus obtained target compound had a melting point of 146 to 149°C.

The chemical shifts (δ ppm) in a proton NMR spectrum (400 MHz) measured in a deuterated DMSO solvent were as follows:
δ: 0.93 (t, 3H, *J* = 7.4 Hz), 1.35-1.47 (m, 2H), 1.62-1.72 (m, 2H), 4.23 (t, 2H, 6.6 Hz), 7.13 (t, 2H, *J* = 8.8 Hz), 7.42-7.50 (m, 2H), 7.58 (d, 2H, *J* = 8.8 Hz), 7.88 (d, 2H, *J* = 8.8 Hz), 8.80 (s, 1H), 9.08 (s, 1H)

### <Synthesis Example 12>

### Synthesis of 1-phenyl-3-(4-(butoxycarbonyl)phenyl)urea

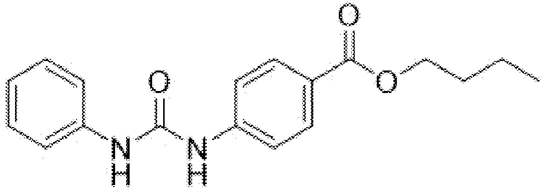

Referring to a known document (Journal of American Chemical Society, 2016, Volume 138 (Issue 40), p.13314-13325), a target compound was obtained by the same operations as in Synthesis Example of 1,3-di-*m*-tolylurea, except that phenyl isocyanate (purchased from Tokyo Chemical Industry Co., Ltd.) was used in place of *m*-tolyl isocyanate at the same molar ratio, and butyl 4-aminobenzoate (purchased from Tokyo Chemical Industry Co., Ltd.) was used in place of *m*-toluidine at the same molar ratio. The thus obtained target compound had a melting point of 120 to 129°C.

The chemical shifts (δ ppm) in a proton NMR spectrum (400 MHz) measured in a deuterated chloroform solvent were as follows:
δ: 0.94 (t, 3H, *J* = 7.4 Hz), 1.37-1.47 (m, 2H), 1.65-1.75 (m, 2H), 4.27 (t, 2H, 6.8 Hz), 7.04-7.10 (m, 1H), 7.22-7.29 (m, 4H), 7.33 (d, 2H, *J* = 8.6 Hz), 7.89 (d, 2H, *J* = 8.6 Hz)

### <Synthesis Example 13>

### Synthesis of 1,3-bis(3-(ethoxycarbonyl)phenyl)urea

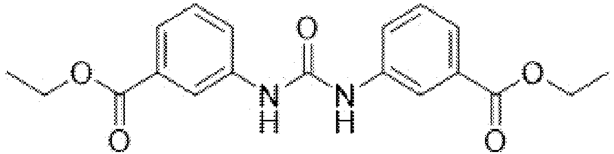

Referring to a known document (Journal of American Chemical Society, 2016, Volume 138 (Issue 40), p.13314-13325), a target compound was obtained by the same operations as in Synthesis Example of 1,3-di-*m*-tolylurea, except that 3-(ethoxycarbonyl)phenyl isocyanate (purchased from Combi-Blocks Inc.) was used in place of *m*-tolyl isocyanate at the same molar ratio, and ethyl 3-aminobenzoate (purchased from Tokyo Chemical Industry Co., Ltd.) was used in place of *m*-toluidine at the same molar ratio. The thus obtained target compound had a melting point of 167 to 168°C.

The chemical shifts (δ ppm) in a proton NMR spectrum (400 MHz) measured in a deuterated chloroform solvent were as follows:
δ: 1.39 (t, 6H, *J* = 7.2 Hz), 4.38 (q,4H, 7.2 Hz), 7.39 (t, 2H, *J* = 8.0 Hz), 7.48 (brs, 2H), 7.74 (d, 2H, *J* = 7.6 Hz), 7.82-7.90 (m, 4H)

### <Comparative Example 1>

A reversibly thermochromic composition was obtained by mixing 1 part of 2'-(2-chloroanilino)-6'-(dibutylamino)fluoran as a leuco dye, 4 parts of 1,3-diphenylurea (purchased from Tokyo Chemical Industry Co., Ltd.) as a color developer, and 25 parts of 4-benzyloxyphenylethyl caprate as a color change temperature regulator.

### <Comparative Example 2>

A reversibly thermochromic composition was obtained in the same manner as in Comparative Example 1, except that 4 parts of 1,3-diphenylthiourea (purchased from Tokyo Chemical Industry Co., Ltd.) was used as the color developer.

### <Example 1>

A reversibly thermochromic composition was obtained by mixing 1 part of 2'-(2-chloroanilino)-6'-(dibutylamino)fluoran as a leuco dye, 4 parts of 1,3-di(3-(trifluoromethyl)phenyl)urea as a color developer, and 25 parts of 4-benzyloxyphenylethyl caprate as a color change temperature regulator.

### <Example 2>

A reversibly thermochromic composition was obtained in the same manner as in Example 1, except that the compound obtained in Synthesis Example 2 was used as the color developer.

### <Example 3>

A reversibly thermochromic composition was obtained in the same manner as in Example 1, except that the compound obtained in Synthesis Example 3 was used as the color developer.

### <Example 4>

A reversibly thermochromic composition was obtained in the same manner as in Example 1, except that 4 parts of 1,3-bis[4-(trifluoromethyl)phenyl]thiourea (purchased from Tokyo Chemical Industry Co., Ltd.) was used as the color developer.

### <Example 5>

A reversibly thermochromic composition was obtained in the same manner as in Example 1, except that the compound obtained in Synthesis Example 4 was used as the color developer.

### <Example 6>

A reversibly thermochromic composition was obtained in the same manner as in Example 1, except that the compound obtained in Synthesis Example 5 was used as the color developer.

### <Example 7>

A reversibly thermochromic composition was obtained in the same manner as in Example 1, except that the compound obtained in Synthesis Example 6 was used as the color developer.

### <Example 8>

A reversibly thermochromic composition was obtained in the same manner as in Example 1, except that the compound obtained in Synthesis Example 7 was used as the color developer.

### <Example 9>

A reversibly thermochromic composition was obtained in the same manner as in Example 1, except that the compound obtained in Synthesis Example 8 was used as the color developer.

### <Example 10>

A reversibly thermochromic composition was obtained in the same manner as in Example 1, except that the compound obtained in Synthesis Example 9 was used as the color developer.

### <Example 11>

A reversibly thermochromic composition was obtained in the same manner as in Example 1, except that the compound obtained in Synthesis Example 10 was used as the color developer.

### <Example 12>

A reversibly thermochromic composition was obtained in the same manner as in Example 1, except that the compound obtained in Synthesis Example 11 was used as the color developer.

### <Example 13>

A reversibly thermochromic composition was obtained in the same manner as in Example 1, except that the compound obtained in Synthesis Example 12 was used as the color developer.

### <Example 14>

A reversibly thermochromic composition was obtained in the same manner as in Example 1, except that the compound obtained in Synthesis Example 13 was used as the color developer.

### <Comparative Example 3>

A composition was obtained in the same manner as in Example 1, except that the color change temperature regulator was not used.

### <Comparative Example 4>

A composition was obtained in the same manner as in Example 3, except that the color change temperature regulator was not used.

### <Comparative Example 5>

A composition was obtained in the same manner as in Example 11, except that the color change temperature regulator was not used.

### <Color Developing Sensitivity>

Measurement samples were prepared by dissolving 30 parts of each of the compositions obtained in Comparative Examples and Examples in 120 parts of methyl ethyl ketone, subsequently applying the resulting solution to a high-quality paper (HAKUGIN, manufactured by Nippon Paper Papylia Co., Ltd.), and curing this paper overnight.

For each of the thus obtained measurement samples, the image density was measured using a spectral density/color meter (eXact, manufactured by X-Rite, Inc.). The results thereof are shown in Tables 1 and 2. It is noted here that a larger value of the image density in this test indicates superior color developing sensitivity.

### <Decoloring Property>

The above-prepared measurement samples were each pressed for 5 seconds at a heat source temperature of 70°C or 90°C using a thermosensitive paper static color development tester manufactured by Okura Engineering Co., Ltd., and the decoloring property was visually evaluated after removing the heat source. The results thereof are shown in Tables 1 and 2. The symbols used for the evaluation of the decoloring property in this test are as follows.
A: The sample was observed with prominent decoloration as compared to before the heat source press.
B: The sample was observed with decoloration as compared to before the heat source press.
C: The sample was observed with hardly any difference as compared to before the heat source press.
D: The sample was observed with no difference as compared to before the heat source press.

**Table 1**

| | Color developer | | Color developing sensitivity | Decoloring property | |
|---|---|---|---|---|---|
| | | | Image density | 70°C/ 5 sec | 90°C/ 5 sec |
| Example 1 | Synthesis Example 1 | 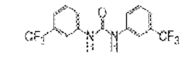 | 0.88 | B | B |
| Example 2 | Synthesis Example 2 | 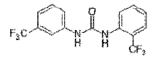 | 0.44 | A | A |
| Example 3 | Synthesis Example 3 | 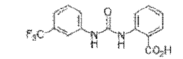 | 0.55 | A | A |
| Example 4 | Commercially available product | 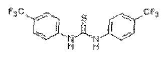 | 0.68 | A | A |
| Example 5 | Synthesis Example 4 | 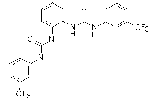 | 0.73 | B | B |
| Example 6 | Synthesis Example 5 | 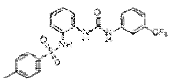 | 0.46 | A | A |
| Example 7 | Synthesis Example 6 | 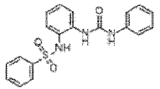 | 0.76 | B | B |
| Example 8 | Synthesis Example 7 | 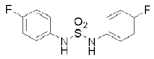 | 0.76 | A | A |
| Example 9 | Synthesis Example 8 | 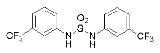 | 0.73 | A | A |
| Example 10 | Synthesis Example 9 | 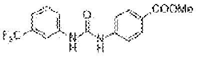 | 0.62 | A | A |
| Example 11 | Synthesis Example 10 | 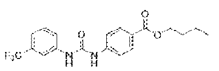 | 0.61 | A | A |
| Example 12 | Synthesis Example 11 | 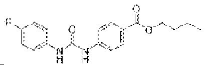 | 0.52 | B | B |
| Example 13 | Synthesis Example 12 | 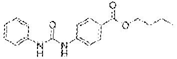 | 0.65 | B | B |
| Example 14 | Synthesis Example 13 | 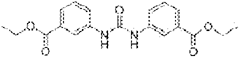 | 0.35 | B | A |
| Comparative Example 1 | Commercially available product | 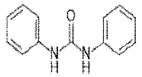 | 0.13 | D | D |
| Comparative Example 2 | Commercially available product | 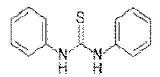 | 0.14 | D | D |

**Table 2**

| | Color developer | | Color developing sensitivity | Decoloring property | |
|---|---|---|---|---|---|
| | | | Image density | 70°C/ 5 sec | 90°C/ 5 sec |
| Comparative Example 3 | Synthesis Example 1 | 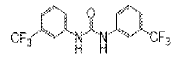 | 0.85 | D | D |
| Comparative Example 4 | Synthesis Example 3 | 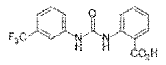 | 0.84 | D | D |
| Comparative Example 5 | Synthesis Example 11 | 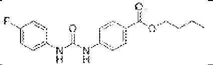 | 0.74 | D | D |

As apparent from Table 1, as compared to the compounds of Comparative Examples 1 and 2, the compounds of Examples 1 to 14 had a high reactivity between an NH group and a leuco dye and exhibited a sufficient color developing sensitivity by containing at least one electron-withdrawing group or hydrogen-bonding group in a benzene ring adjacent to an NH group of a urea, thiourea, or a sulfamide structure. In addition, since the electron-withdrawing group was not directly bound to the urea, thiourea, or sulfamide structure, the reactivity with the leuco dye was not excessively high, and favorable desorption (i.e. decoloring property) was obtained. Therefore, the compound according to the present application can be used as a color developer of a non-phenolic reversibly thermochromic composition that has both excellent color developing sensitivity and excellent decoloring property.

Further, as apparent from Table 2, it is seen that the decoloring property is not exerted in the absence of a color change temperature regulator.

## Claims

1. A reversibly thermochromic composition, comprising:
a color developer comprising a compound represented by the following Formula (1);
a leuco dye; and
a color change temperature regulator: 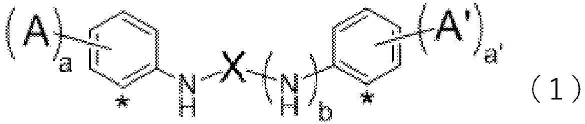 (wherein, a, a', b, A, A', and X are as follows:
a represents an integer selected from 0 to 5;
a' represents an integer selected from 0 to 5;
b represents 0 or 1;
X represents -C(=Y)- or -SO₂-;
a sum of a and a' is 1 or more;
A and A' each independently represent an electron-withdrawing group or a hydrogen-bonding group; and
Y represents O or S,
with a proviso that benzene rings in Formula (1) each optionally have a substituent other than A or A').

2. The reversibly thermochromic composition according to claim 1, wherein, in Formula (1), at least one of A or A' is an electron-withdrawing group selected from a halogen atom, a nitrile group, a carboxyl group, an alkyl group having at least one fluoro group, and an oxycarbonyl group, a carbonyl group, an aminocarbonyl group, an aminosulfonyl group, a sulfinyl group, and a sulfonyl group, which optionally have a substituent.

3. The reversibly thermochromic composition according to claim 2, wherein, in Formula (1), at least one of A or A' is an electron-withdrawing group selected from a fluoro group, an alkyl group having at least one fluoro group, and an oxycarbonyl group optionally having a substituent.

4. The reversibly thermochromic composition according to claim 1, wherein, in Formula (1), at least one of A or A' is a hydrogen-bonding group selected from a carboxyl group, and an amino group, a carbonylamino group, a urea group, and a sulfonylamide group, which optionally have a substituent.

5. The reversibly thermochromic composition according to any one of claims 1 to 4, wherein, in Formula (1), at least one of A or A' is bound to the *-position.

6. The reversibly thermochromic composition according to claim 4 or 5, wherein, in Formula (1): a is 1 or more; at least one A is bound to the *-position; the A bound to the *-position is a hydrogen-bonding group selected from a carboxyl group, and an amino group, a carbonylamino group, a urea group, and a sulfonylamide group, which optionally have a substituent; and b is 0.

7. The reversibly thermochromic composition according to any one of claims 1 to 5, wherein, in Formula (1), b is 1.

8. A microcapsule pigment, comprising the reversibly thermochromic composition according to any one of claims 1 to 7 that is encapsulated in a microcapsule.

9. A writing utensil, comprising the reversibly thermochromic composition according to any one of claims 1 to 7, or the microcapsule pigment according to claim 8.

10. A toy, comprising the reversibly thermochromic composition according to any one of claims 1 to 7, or the microcapsule pigment according to claim 8.
